# EUROPEAN PATENT APPLICATION

(11) **EP 4 625 033 A1**
(43) Date of publication of application: **01.10.2025**
(21) Application number: 24166202.2
(22) Date of filing: 26.03.2024
(51) Int. Cl.: G02F 1/1676, E06B 9/24, G02F 1/1345, G02F 1/165

(54) **LIGHT MODULATOR WITH CONNECTION AREA**

(71) Applicant: eLstar Dynamics Patents B.V., 3235 CD Rockanje (NL)
(72) Inventor: MASSARD, Romaric Mathieu, 5651 GW Eindhoven (NL); MITIOGLU, Anatolie, 5651 GW Eindhoven (NL); VAN MULLEKOM, Steven, 5651 GW Eindhoven (NL); BOUTS, Patrick Johannes Catharina, 5651 GW Eindhoven (NL)
(74) Representative: DeltaPatents B.V.

(57) **Abstract**

Some embodiments are directed to a light modulator. The light modulator has a contact area on one of its substrates, to enable an electrical connection to at least the one or more driving electrodes applied on the substrate. A first edge of the first substrate is laterally offset from a corresponding first edge of the second substrate to accommodate the contact area in the laterally offset part.

## Description

### TECHNICAL FIELD

The presently disclosed subject matter relates to a light modulator, a substrate for a light modulator, and a manufacturing method for a light modulator.

### BACKGROUND

A known light modulator is disclosed in WO2022023180, included herein by reference. The known light modulator comprises transparent or reflective substrates. Multiple electrodes are applied to the substrates in a pattern across the substrate. A controller may apply an electric potential to the electrodes to obtain an electric field between the electrodes providing electrophoretic movement of the particles towards or from an electrode.

### SUMMARY

A light modulator, a substrate for a light modulator, and a manufacturing method for a light modulator are described in the accompanying claims. Specific embodiments of the invention are set forth in the dependent claims.

In an embodiment, a light modulator has one or more contact areas that enable electrical connection to at least the one or more driving electrodes applied on one or both of the substrates of the light modulator. Interestingly, a first edge of a first substrate is laterally offset from a corresponding first edge of a second substrate to accommodate the contact area. The contact area runs along the first edge of the first substrate in the laterally offset part.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a building block,
Figure 1b schematically shows an example of an embodiment of a substrate,
Figure 1c schematically shows an example of an embodiment of a substrate,
Figure 1d schematically shows an example of an embodiment of a substrate,
Figure 1e schematically shows an example of an embodiment of a substrate,
Figure 1f schematically shows an example of an embodiment of a substrate,
Figure 1g schematically shows an example of an embodiment of a light modulator,
Figures 2a-2f schematically show an example of an embodiment of a substrate,
Figure 3a schematically shows an example of an embodiment of a light modulator,
Figure 3b schematically shows an example of an embodiment of a light modulator,
Figure 3c schematically shows an example of an embodiment of a car,
Figures 4a-4c schematically show an embodiment of a light modulator,
Figure 5a. 1 schematically shows an example of an embodiment of a first substrate,

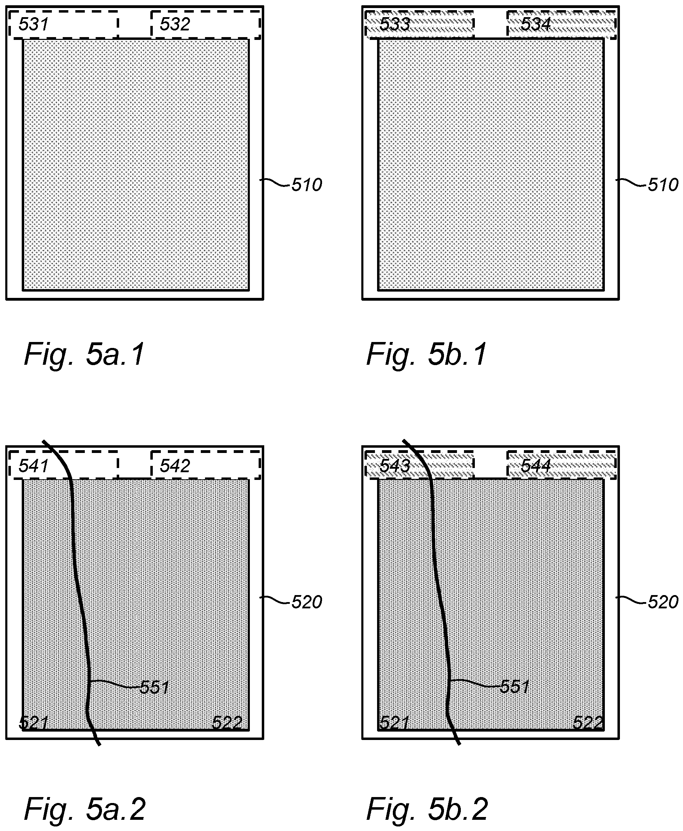

Figure 5a.2 schematically shows an example of an embodiment of a corresponding second substrate,
Figure 5b.1 schematically shows an example of an embodiment of a first substrate,
Figure 5b.2 schematically shows an example of an embodiment of a corresponding second substrate,

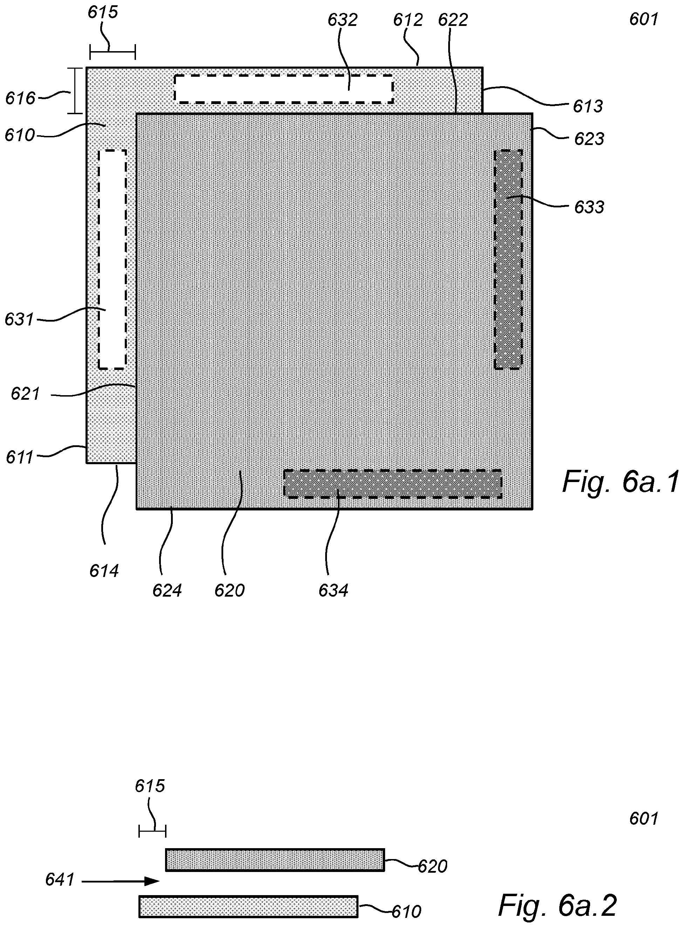

Figure 6a. 1 schematically shows an example of an embodiment of a light modulator in a top view,
Figure 6a.2 schematically shows an example of an embodiment of the light modulator in a side view,

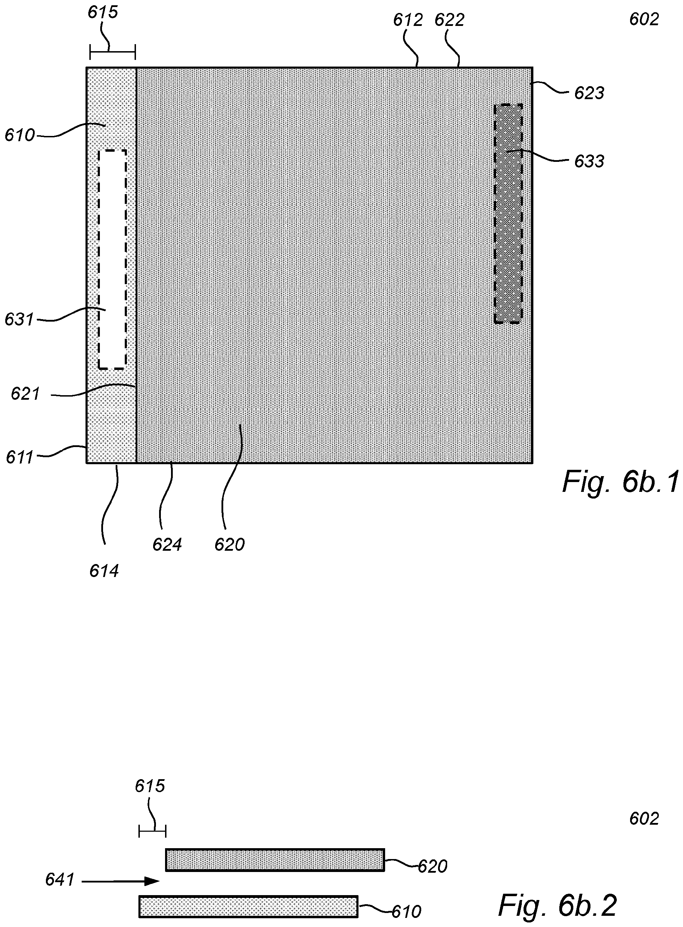

Figure 6b.1 schematically shows an example of an embodiment of a light modulator in a top view,
Figure 6b.2 schematically shows an example of an embodiment of the light modulator in a side view,

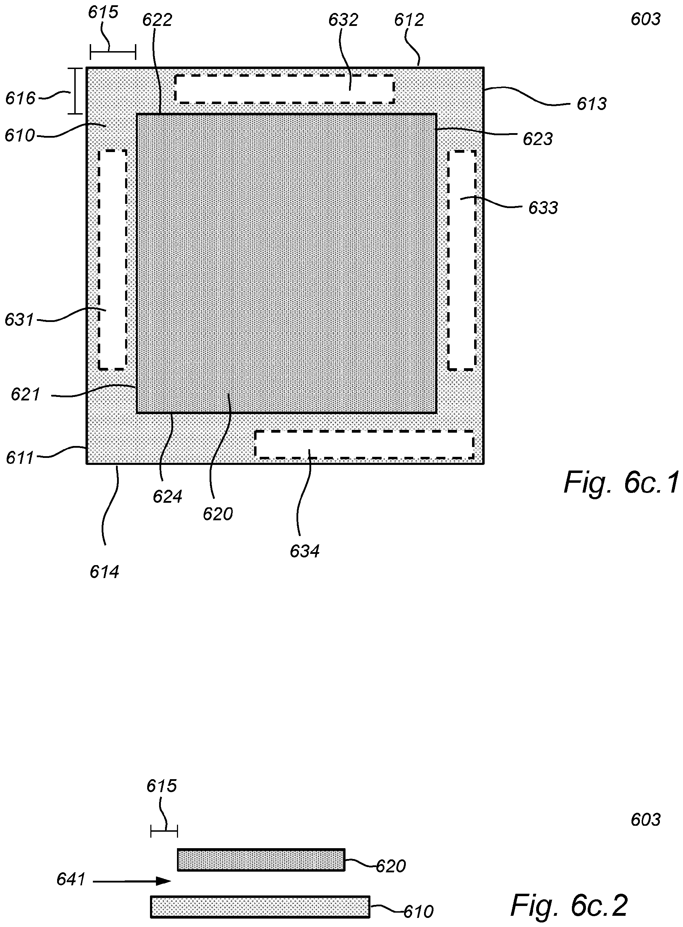

Figure 6c. 1 schematically shows an example of an embodiment of a light modulator in a top view,
Figure 6c.2 schematically shows an example of an embodiment of the light modulator in a side view,

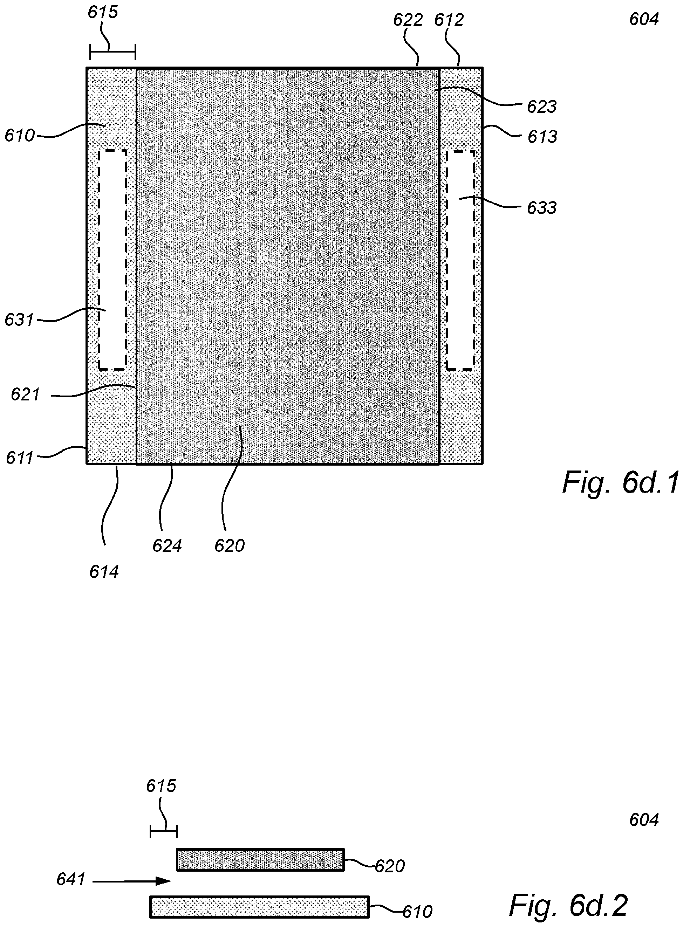

Figure 6d.1 schematically shows an example of an embodiment of a light modulator in a top view,
Figure 6d.2 schematically shows an example of an embodiment of the light modulator in a side view,

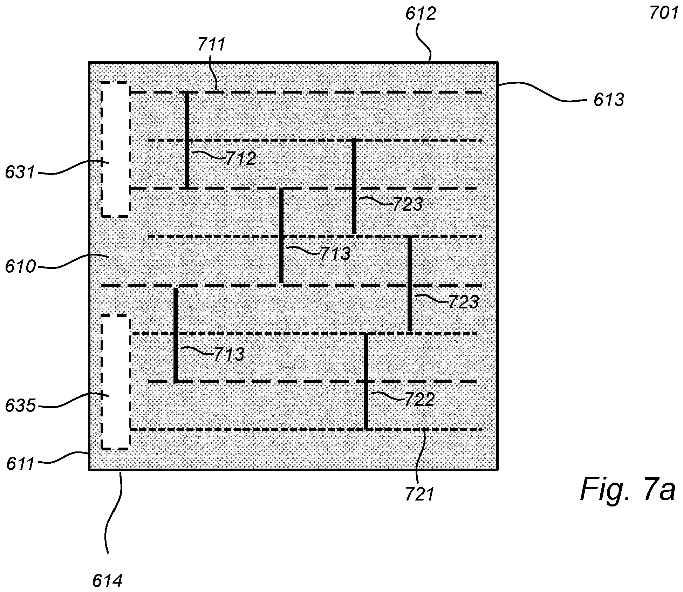

Figure 7a schematically shows an example of an embodiment of a substrate for a light modulator,

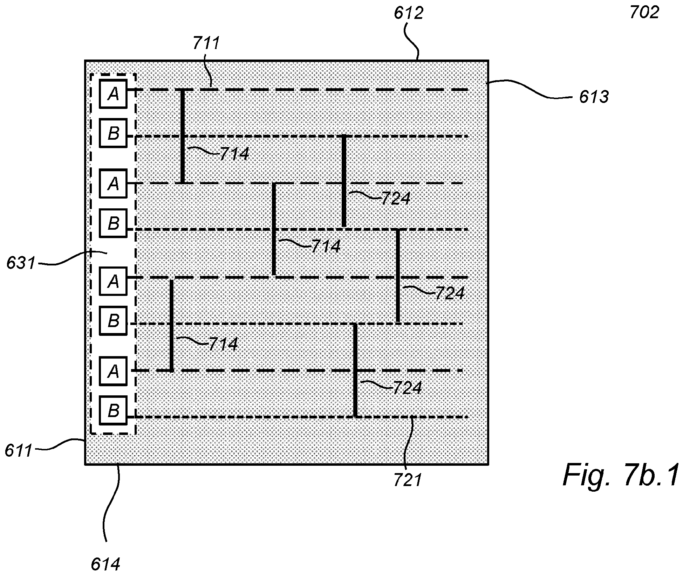

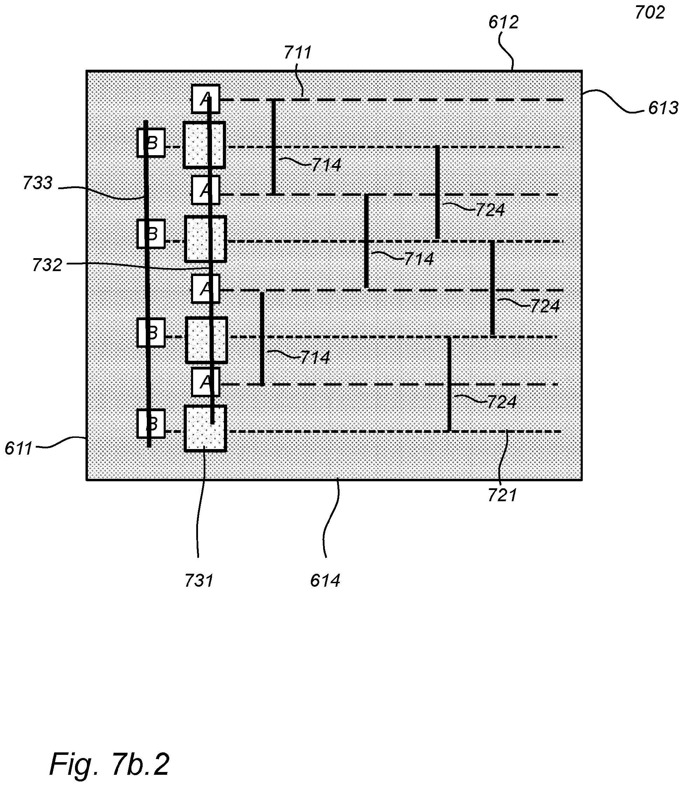

Figure 7b. 1 schematically shows an example of an embodiment of a substrate for a light modulator,
Figure 7b.2 schematically shows an example of an embodiment of a substrate for a light modulator,

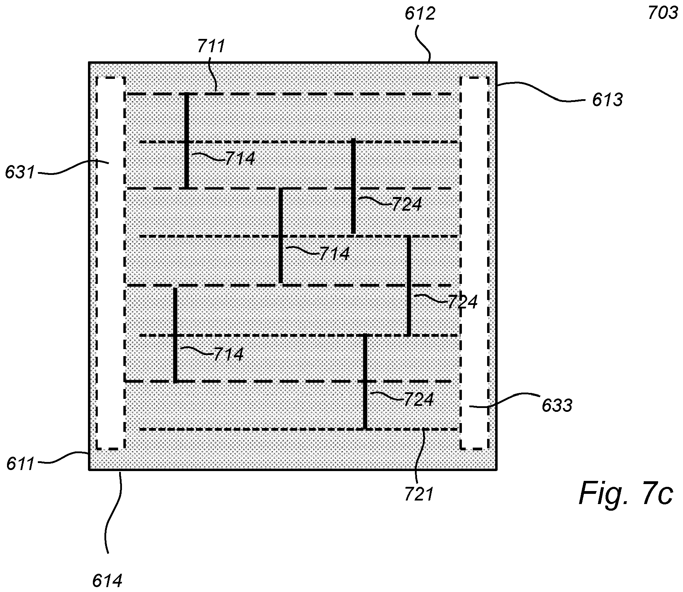

Figure 7c schematically shows an example of an embodiment of a substrate for a light modulator,

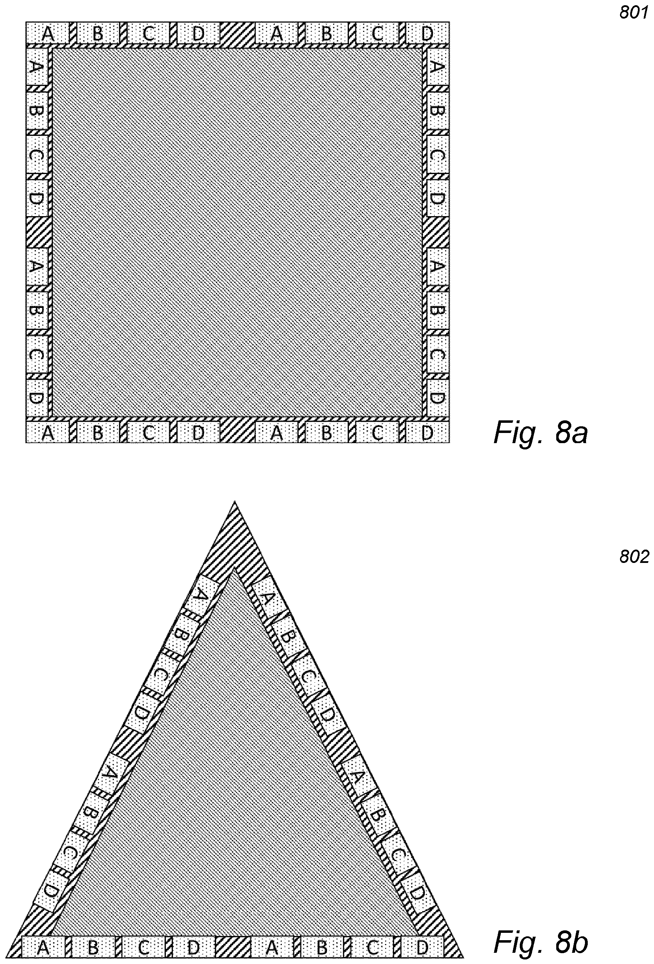

Figure 8a schematically shows an example of an embodiment of a substrate for a light modulator,
Figure 8b schematically shows an example of an embodiment of a substrate for a light modulator,

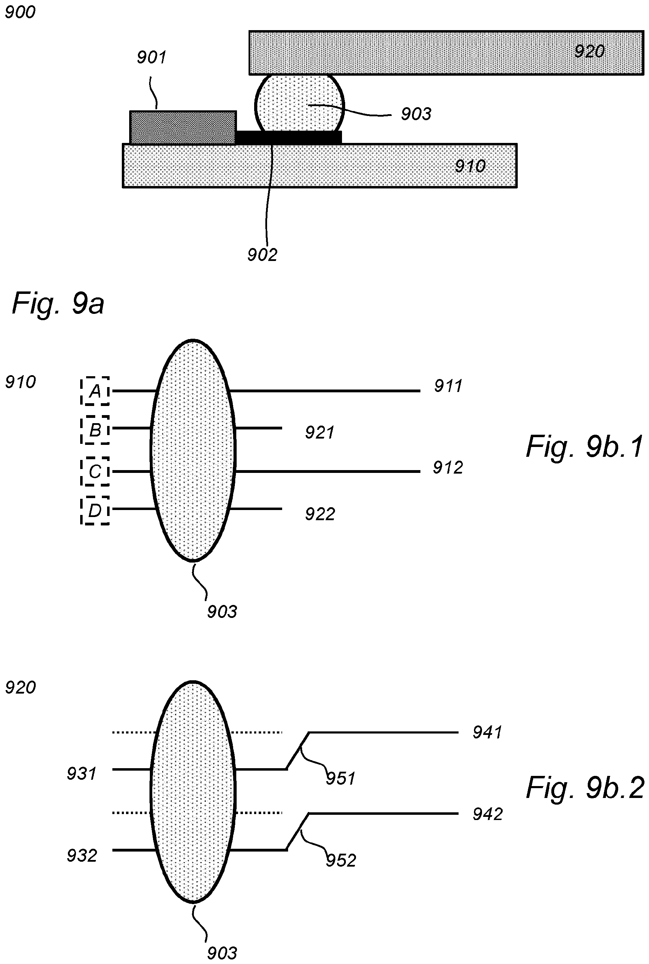

Figure 9a schematically shows an example of an embodiment of a light modulator,
Figure 9b.1 schematically shows an example of an embodiment of a first substrate for a light modulator,
Figure 9b.2 schematically shows an example of an embodiment of a second substrate for the light modulator,

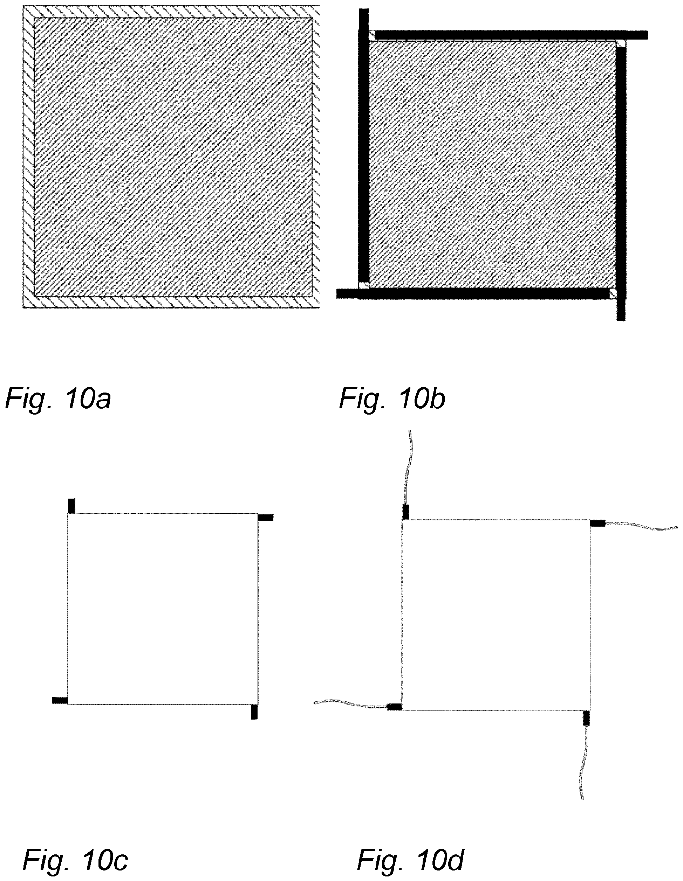

Figures 10a-10f schematically show examples of an embodiment of a light modulator,

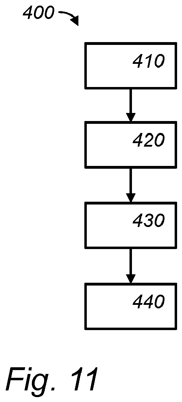

Figure 11 schematically shows an example of an embodiment of a manufacturing method for a light modulator.

### Reference signs list

The following list of references and abbreviations corresponds to the figures, and is provided for facilitating the interpretation of the drawings and shall not be construed as limiting the claims.
- 10: a light modulator
- 11: a first substrate
- 12: a second substrate
- 13, 13a, 13b: electrodes
- 14, 14a, 14b: electrodes
- 15: a fluid
- 16: a controller
- 30: particles
- 20: a car
- 21: a light modulator
- 40: a light modulator
- 41: a first substrate
- 42: a second substrate
- 43: a third substrate
- 46: a controller

- 100-102: a substrate
- 111-114: a main line
- 121-124: a main line
- 131-134: interdigitated electrodes
- 140: a building block
- 141-144: a building block
- 110, 120: a driving bus
- 110', 120': a driving bus
- 119, 129: a connecting zone
- 191, 192: a direction
- 203-204: a substrate
- 211-222: a building block
- 251-262: a building block
- 151: a spacer

- 531,532: a contact area
- 533,534: a contact area
- 541,542: a contact area
- 543,544: a contact area
- 510: a first substrate
- 520: a second substrate
- 521, 522: part of active area
- 551: crack
- 601-604: a light modulator
- 610: a first substrate
- 620: a second substrate
- 611-614: an edge of the first substrate
- 621-624: an edge of the second substrate
- 631-634: a contact area
- 615, 616: a lateral offset
- 641: an optical layer
- 701-702: a substrate
- 635: a contact area
- 712, 713: an interconnection
- 714, 724: an interconnection
- 722, 723: an interconnection
- 711: a main line
- 721: a main line
- 801, 802: a substrate
- 900: a light modulator
- 910: a first substrate
- 920: a second substrate
- 901: a contact area
- 902: an electrode
- 903: anisotropic connecting element
- 911, 912: first substrate electrodes
- 921, 922: first substrate connecting electrodes
- 931, 932: second substrate connecting electrodes
- 951, 952: transitioning element
- 941, 942: second substrate electrodes
- 811: tempered glass
- 812: PVB
- 813: Light modulator
- 814: PVB
- 815: tempered glass

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

In an embodiment, a light modulator is provided with a connection area arranged to enable a more robust product in case of substrate fracture and/or a better location for arranging the connection area on a substrate. The connection area allows connection from a controller of the light modulator to electrodes on the substrate to allow modulation of an optical layer of the light modulator.

In conventional light modulators, one or both substrates have patterned electrodes. The electrodes, e.g., metal tracks, conduct electricity across the substrate. This causes electric fields, which in turn modulate the optical field. If one of those electrodes, e.g., tracks, are broken, they will not conduct electricity beyond the breakage. In a conventional light modulator, a portion of the substrate will then no longer receive electricity. The optical layer will revert to its natural state, which is typically non-transparent, e.g., black, and will remain black for ever more.

Fractures in the substrate, e.g., a glass substrate can happen in product usage due to various reasons. For example, a substrate, e.g., a glass substrate, may be exposed locally to different temperatures; for example, sun exposure and/or shadow may be different across the substrate.

Moreover, in practice the thin glass substrate of the light modulator is often attached to a thicker glass for mechanical robustness, e.g., for applications in automotive or architectural. PVB type material may be used to attach the thicker glass together with the light modulator glass. However, not only the glass thickness is different but also the type. Typically, the thicker glass is tempered, e.g., tempered window glass, while the light modulator glass is not, e.g., untempered display glass. This results in different thermal coefficients for both type of glass while they are glued via the PVB. This could then result in a glass fracture which then may break the tracks deposited on the glass and the contact pads.

Finally, mechanical shocks during production, installation or usage may cause fracture of the substrate. In an embodiment, new designs are introduced that allow completer functioning of the light modulator despite electrode fractures occurring.

In an embodiment, a light modulator is provided with a connection area arranged to enable easier manufacture and connecting in use. In particular, two corresponding edges of the first and second substrate are laterally offset, creating a ledge to accommodate the contact area. The lateral offset(s) facilitate easier access and connection of electrical components by creating space for the contact area, enhancing manufacturing simplicity and robustness.

Substrates are disclosed, e.g., for use in a light modulator, in particular, dynamic glazing. The substrate is transparent, and at least one electrode is applied to a side of the substrate, the electrode extending in a pattern across the side of the first substrate. At least one of the first and second substrates is transparent. In a glazing application both substrates are transparent. In other applications, e.g., a display, one of the two substrates may be opaque.

Dynamic glazing, also known as smart glazing, may comprise a system wherein the transparency or optical properties of a glazing material are altered in response to an external electrical input. This system may allow for active control over light and heat transmission, thereby enhancing energy efficiency and user comfort in various architectural or vehicular applications.

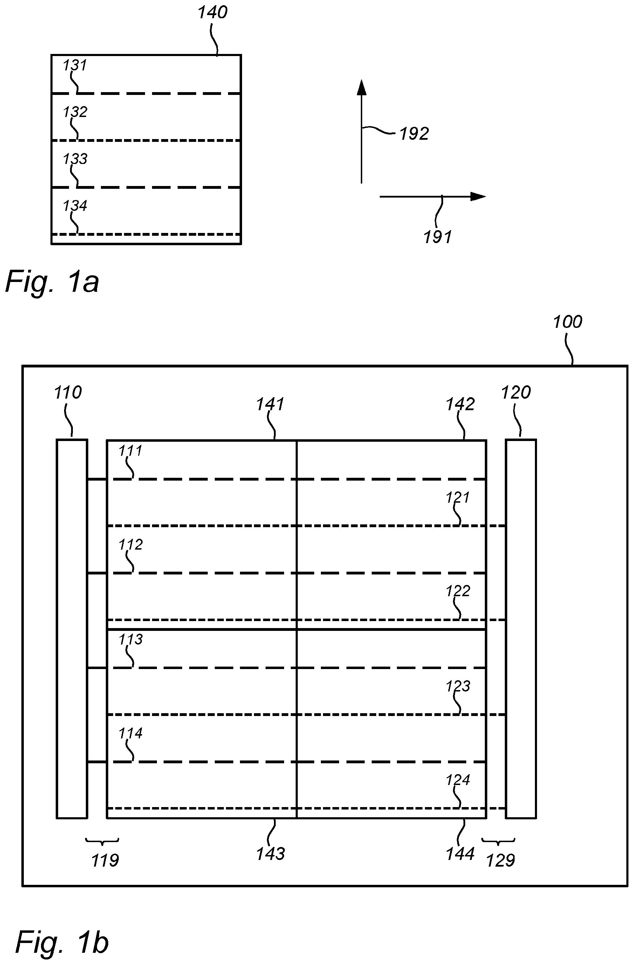

Figures 1a- 4c provide various examples of the electrode system on the first and second substrate and how they may be implemented or used in a light modulator. Figure 5a and following focus on the contact area, e.g., its placement and/or composition, and/or how the electrodes may interact with it.

Some of the known light modulators which may be provided with a contact area are based on the electrophoretic principle. For example, the substrate may comprise multiple interdigitated electrodes applied to the substrate, e.g., two electrodes, each of the multiple electrodes being arranged in a pattern across the substrate, the multiple interdigitated electrodes being arranged alternatingly with respect to each other on the substrate. Having multiple interdigitated electrodes allows local control over the electric field enabling electrophoretic control of particles.

Electrophoretic light modulators are explained more extensively herein and are used as the motivating example. In an embodiment, a light modulator comprises a first substrate and a second substrate. At least one of the first and second substrate may be according to an embodiment, having one or more contact areas. For example, the first and second substrates may be arranged with inner sides opposite to each other, using a substrate according to an embodiment. An optical layer is arranged between the first and second substrates. The electrode is arranged to modulate an electrical field in the optical layer. The optical layer comprises a fluid, e.g., liquid, comprising particles, wherein the particles are electrically charged or chargeable. The particles may be moved under control of the electrical field. For example, a controller may be configured to apply an electric potential to the electrode to obtain an electric field at the electrode providing electrophoretic movement of the particles towards or from one of the at least one electrode causing modulation of the optical properties of the light modulator. For example, optical properties may include a transition between a high-transparent state and a low-transparent state or vice versa. Note that a transition may also alter thermal properties of the light modulator.

Below a number of known light modulators are reviewed, showing some of the options in technology and electrodes. These known substrates can advantageously be modified by adding a contact area according to an embodiment., reducing damage from fractures, simplifying manufacture, and increasing robustness of connection. These examples also show light modulators with varying numbers of electrodes on a substrate.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate. Accumulation electrode and/or field electrode may both be driven from a contact area.

US patent 10921678 with title `Electrophoretic device', included herein by reference shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode, and a second substrate opposite of the first substrate, with an accumulation electrode. The first substrate and the second substrate enclose a pixel with a fluid and particles. In use an applied electric field to the field electrode and the accumulation electrode provides movement of the particles from the field electrode and the accumulation electrode and vice versa. Any of these cited electrophoretic or dielectrophoretic light modulators may be adapted by including one or more contact areas according to an embodiment.

US patent 8054535B2 (included herein by reference) and US patent 8384659b2 (included herein by reference) show alternative example of electrophoretic light modulators in one of two substrates have two patterned electrodes.

Patterned electrodes are also used in dielectrophoretic light modulators. For example, US patent application US2005185104A1 (included herein by reference) and US20180239211A1 (included herein by reference) show a dielectrophoretic light modulators having a substrate with a patterned electrode. Any of these cited electrophoretic or dielectrophoretic light modulators may be adapted by including one or more contact areas according to an embodiment.

The paper "Reversible Metal Electrodeposition Devices: An Emerging Approach to Effective Light Modulation and Thermal Management", included by reference, also shows a substrate on which a patterned electrode is applied. A contact area according to an embodiment may be included herein.

An embodiment of a substrate may be used in an electrochromic device (ECD). An electrochromic device (ECD) controls optical properties such as optical transmission, absorption, reflectance and/or emittance in a continual but reversible manner on application of voltage (electrochromism). This property enables an electrochromic device to be used for applications like smart glass, electrochromic mirrors, and electrochromic display devices. A contact area according to an embodiment may be included herein.

An electrochromic device is described, e.g., in the paper "Silver grid electrodes for faster switching ITO free electrochromic devices" by António Califórnia et al., included herein by reference. The paper describes the preparation of an electrochromic device, in this case one which is ITO free. A contact area according to an embodiment may be included herein.

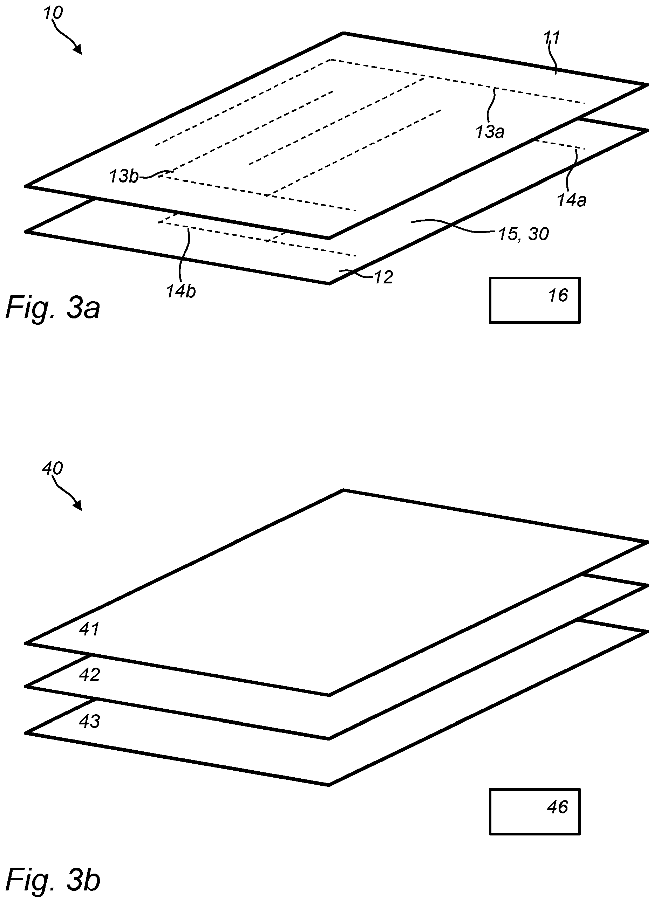

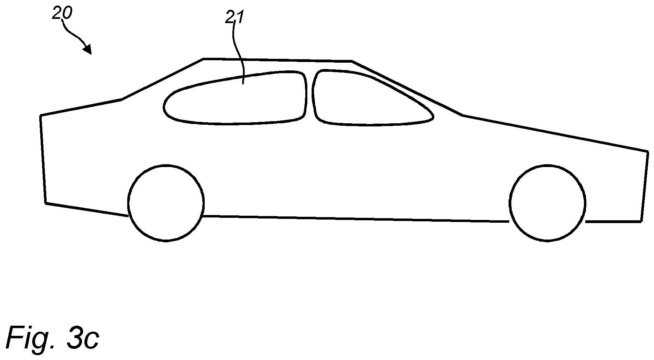

An electrochromic device uses electrically conductive electrodes applied on a substrate. The cited paper uses silver grids, made using silver ink, as electrically conductive electrodes. An electrochromic device may comprise an electrochromic material. The cited paper uses poly(3,4-ethylenedioxythiophene) polystyrene sulfonate (PEDOT:PSS). In an electrochromic device, at least one electrode, e.g., the electrically conductive electrode, is applied to a substrate. The electrode being arranged in a pattern across the substrate. The cited paper discloses two different grid patterns a regular hive and a regular ladder design. See table 1 and figure 3 of the cited paper. A contact area according to an embodiment may be included herein.

Electrodes may be applied to a substrate by screen-printing on a substrate, in the case of the cited paper, polyethylene terephthalate (PET). The electrodes are typically an electrically conductive material, e.g., a metal or metal oxide. In the cited paper, silver ink was used to screen print the grids on PET using a RokuPrint RP 2.2 equipment and a 180 wired mesh. The samples were allowed to dry in an oven at 130 °C during 15 min. On top of these silver grids, one or two layers of PEDOT:PSS SV3 were posteriorly printed by screen printing. A contact area according to an embodiment may be included herein.

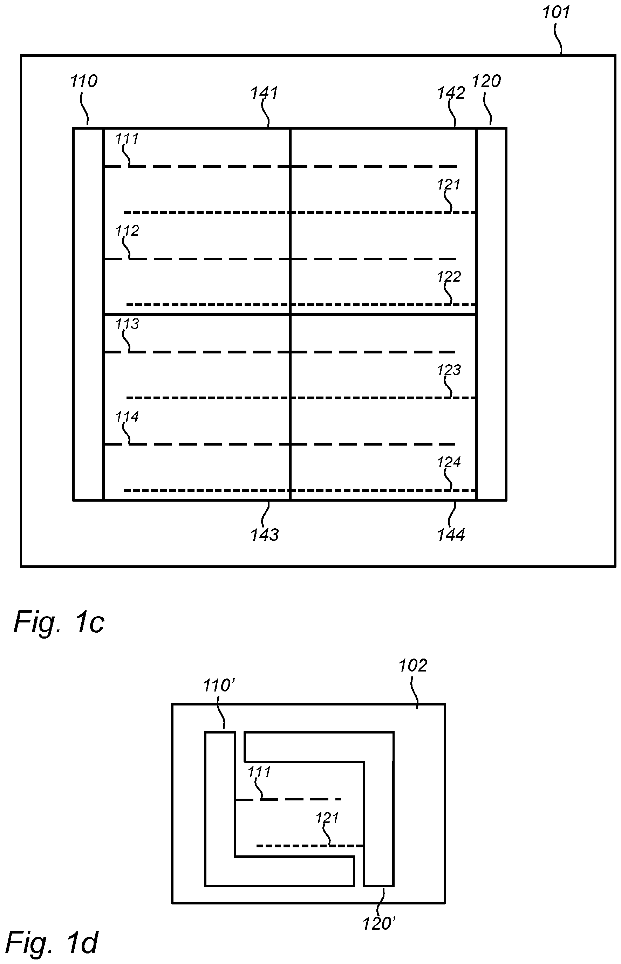

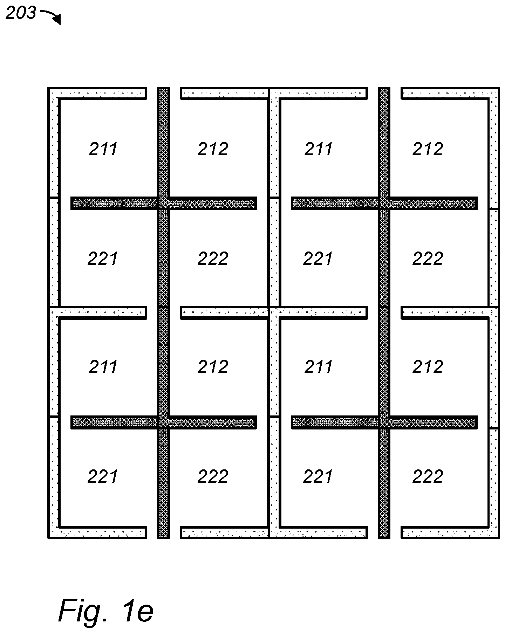

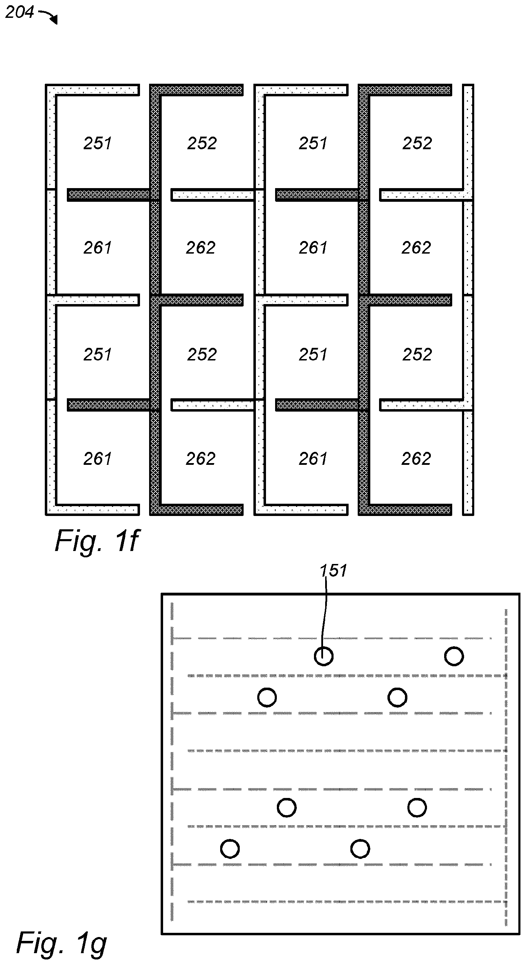

Another example of an electrochromic device is given in US patent 5161048, with title "Electrochromic window with metal grid counter electrode and acidic polyelectrolyte", included herein by reference. For example, an electrochromic device may comprise a transparent electrochromic film and an ion-conductive layer disposed between a pair of electrodes. The metal grid electrode is issued for the electrodes. Figure 1 of the patent shows a metal grid according to the cited patent. To form the counter electrode, a metal grid is disposed adjacent to the second glass substrate.

For example, in an embodiment of an electrochromic device, the electrochromic device may comprise a transparent substrate, an electroconductive electrode member, a transparent electrochromic film in contact with said electroconductive electrode member, an ion-conductive polymer in contact with said electrochromic film; and a patterned conductive electrode in contact with said ion-conductive polymer. A contact area according to an embodiment may be included.

A substrate according to an embodiment can be beneficially applied in a number of other technologies. For example, the light modulator may be dielectrophoretic light modulator, e.g., as shown in US20050185104 A1, included herein by reference. A contact area according to an embodiment may be included herein.

A substrate as in an embodiment may also be used in other electrowetting and OLED applications. In OLED and electrowetting one needs electrodes on only one of the substrates. The substrate with electrodes may be according to an embodiment including a contact area.

Yet other dynamic glass technologies may be used.

For example, an optical layer for a light modulator, e.g., in dynamic glazing, may use LCD (Liquid Crystal Display) technology. For example, the optical layer may comprise liquid crystal molecules that can be aligned to control the amount of light passing through the display. When an electric current is applied to the liquid crystal molecules, they change their alignment and modify the way that light passes through the material. The optical layer with LCD material may be placed between two layers of glass or plastic and connected to an electrical circuit. By controlling the electric current applied to the LCD material, the amount of light passing through the glazing may be adjusted. A contact area according to an embodiment may be included herein.

An optical layer for a light modulator, e.g., in dynamic glazing, may use Suspended Particle Device (SPD) technology. The optical layer may comprise particles suspended within a thin film or laminate. By applying an electrical current to the SPD film, the particles align and modify the amount of light passing through the material, allowing for dynamic control of the glazing. When the electrical current is turned off, the suspended particles randomize and allow more light to pass through, creating a clear or transparent effect. When the electrical current is turned on, the particles align and absorb more light, creating a darker or tinted effect. A contact area according to an embodiment may be included herein.

In an application of the light modulator for glazing both substrates are typically transparent. In other application, e.g., in television, e-readers, etc., only one substrate may be transparent.

**Figure 1b** schematically shows an example of an embodiment of a substrate. The substrate is in particular useful for use in a light modulator, e.g., of a kind described herein. Across the substrate an electrode system is applied in the form of multiple interdigitated electrodes. Shown in figure 1b are two interdigitated electrodes. The substrate also comprises at least one contact area arranged to enable electrical connection to at least the one or more driving electrodes applied on the substrate.

The motivating example use of the substrate is in an electrophoretic light modulator. Typically, an electrophoretic light modulator comprising at least two substrates, each having at least two electrodes at each of the substrates; this is not necessary though, for example, an electrophoretic light modulator may comprise a single substrate with 2 electrodes and an opposite substrate with 1 electrode. In any case, preferably, at least one of the substrates in the light modulator is according to an embodiment.

An embodiment of a light modulator comprises a first substrate according to an embodiment and a second substrate. The first and second substrates are arranged with inner sides opposite to each other. At least one electrode is applied to the inner side of the first substrate. An optical layer is arranged between the first and second substrates. A controller is configured to apply an electric potential to the at least one electrode causing modulation of the optical properties of the light modulator. One or both of the first and second substrates are transparent and/or translucent.

There are many different kinds of light modulators that use at least one electrode applied to a substrate. The optical layer and controller may be arranged to modulate optical properties using effects that depend on the potential on the electrode; examples including the dielectrophoretic effect and the electrophoretic effect. For example, optical modulation may comprise the modulation of particles arranged in the optical layer. The number of electrodes may range from one on a single substrate, to multiple electrodes on one or both substrates.

The optical layer arranged between the first and second substrates may comprise particles, e.g., suspended in a fluid. The controller may be configured to apply an electric potential to the electrodes causing the particles to move thus modulating the optical properties of the light modulator.

In an embodiment, the particles comprise electrically charged or chargeable particles, and the controller is configured to apply an electric potential to the electrode to obtain an electric field providing electrophoretic movement of the particles. In an embodiment, the electric field is arranged between at least two electrodes arranged on the same substrate or arranged on different substrates.

In an embodiment, the particles comprise dielectric particles, and the controller is configured to apply an electric potential to the electrode to apply an electric field gradient to the particles enabling the particles to be moved under the action of dielectrophoretic forces.

The controller may apply an electric signal to one or more of the electrodes. Embodiments that control dielectrophoretic forces may use a signal that comprises a DC signal and/or an AC signal. Embodiments that control electrophoretic forces may use a signal that comprises a DC signal and/or an AC signal.

Shown in figure 1b are two electrodes on the same surface. The two electrodes are indicated in figure 1b in two different dashing styles. There could be more than two electrodes on the same side of the substrate, e.g., to facilitate more fine-grained control of voltage differences across the substrate. The electrodes are applied to a same side of the substrate. Applying electrodes to a substrate may be done lithographically, e.g., using a mask representing the electrodes pattern. Electrodes may also be applied by embedding them in the substrate.

An electrode is electrically connected, e.g., has the same electric potential everywhere. An electrode may comprise a driving bus and main lines. At least, the main lines are interdigitated with main lines of a further electrode. Typically, the electrodes extend in a substantially straight line across the substrate, while the main lines are convoluted.

In an embodiment, the two substrates of a light modulator each have two electrodes arranged at its inner surface. Though, as mentioned, multiple electrodes on one or both substrates are not needed. For example, an embodiment of a light modulator comprises a first substrate and a second substrate. For example, the first substrate may comprise one electrode, the second substrate may not comprise electrodes. For example, the first substrate may comprise two electrodes, the second substrate may comprise one electrode. For example, the first substrate may comprise two electrodes, the second substrate may comprise two electrodes. For example, the first substrate may comprise more than two electrodes, the second substrate may comprise two or more electrodes.

Light modulators, wherein each substrate comprises two electrodes are used as a motivating example, though. Designs of substrates featuring two electrodes may be adapted to have a single electrode, e.g., by connecting the two electrodes, or by removing one of the electrodes. Adapting a substrate in such a manner may make it suitable for use in different technologies.

Each of the multiple electrodes are arranged in a pattern across the substrate. The multiple electrodes are arranged alternatingly with respect to each other on the substrate. Typically, an electrode comprises multiple main lines, that each stretch across the substrate. The main lines of the electrodes alternate, e.g., interdigitate. For example, in figure 1b the first electrode comprises main lines 111-114, and the second electrode comprises main lines 121-124. The electrodes are each driven by its driving bus. Figure 1b shows two driving buses: driving bus 110 and driving bus 120. The electrodes also serve to connect the main lines together. For example, in figure 1b, the driving bus 110 drives and connects main lines 111-114; and the driving bus 120 drives and connects main lines 121-124. There can be more main lines than the four shown in this example. The use of main lines is advantageous as it reduces the length of the electrodes, but it is not necessary. A design using only one main line per electrode is not impossible, though having multiple is advantageous.

The driving buses may be adapted to form a contact area to enable electrical connection to at least the one or more driving electrodes applied on the first substrate, e.g., a connection from outside the light modulator. This is not necessary, and a separate contact area, e.g., additional to driving buses 110 and 120 may be provided as in an embodiment.

The multiple of main lines of the first and second electrode are arranged alternatingly with respect to each other on the substrate.

In this example, there are no other connections between the main lines of an electrode than through the common driving bus. In an embodiment, an electrode comprises a mesh electrode, that is, it may have additional electrical connection may be added between electrode lines of the same electrode. This increases the reliability of the electrode. Such additional connections typically cross an electrode line of another electrode, which may be resolved by placing the additional electrical connection in part on a different level with respect to the substrate than the electrode line being crossed. For example, one may place the entire electrodes at a different level than another electrode. In this way, additional connections may be placed without short circuits arising.

A motivating application for a substrate such as substrate 100 is in smart glazing, e.g., a light modulator, which may be applied in domestic housing, offices, green houses, cars, and the like. The level of transparency or reflectivity of the smart glazing can be adapted electrically. For example, in smart glazing two substrates such as substrate 100 would be stacked so that the sides on which the two electrodes are applied face each other. A fluid with particles is enclosed between the two substrates. Smart-glazing embodiments are further discussed below. In an embodiment, electrodes, e.g., two or more electrodes are applied to one surface of each substrate. There could also be one, two or more electrodes on the other surface of substrate 100, e.g., to facilitate stacking of three or more substrates.

Some embodiments below show examples of modulating a transparency or reflectivity level. Light modulators may be adapted for other optical effects. For example, if desired, embodiments could be modified to different levels of translucency instead of different levels of transparency. If desired, the type of particle that is used in an embodiment can be varied, e.g., to particles that differ in which wavelengths they absorb or reflect, and how specular of diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets the electric field at any part of the substrate can be controlled as two opposite electrodes border the part from two opposing sides.

Interestingly, the pattern in which the electrodes stretch across the substrate may be created by multiple repeated building blocks. Shown in figure 1b, the electrodes on substrate 100 shows four blocks: blocks 141, 142, 143 and 144 which are all substantially the same. The number of building blocks may be larger than four. The building blocks repeat in both directions across the substrate, e.g., a first direction 191, e.g., an x-direction, shown horizontally in the figure, and a second direction 192, e.g., a y-direction, shown vertically in the figure. Using building blocks is advantageous as it allows manufacture using a stepper machine; using building blocks is not necessary.

For example, **figure 1a** schematically shows an example of an embodiment of a building block 140. Building block 140 comprises multiple interdigitated electrodes extending in at least 2 directions across the building block. Shown in figure 1a are four electrodes: electrode 131-134. When the building blocks are repeated across a substrate in two directions, the electrodes in the building block will form the electrodes, e.g., form the multiple main lines of the electrodes. Note that the building blocks are typically connected in a substrate-electrode design tool. Typically, a building block comprises more than four electrode lines. For example, in a range of embodiments between 8 and 12 main lines are used. The number of electrode lines can be much higher though. For example, a building block may comprise many short electrode lines near the edges that connect to lines of other building blocks when the block is repeated. Taking such short offshoots into account, the number of lines could go up to, say, 50. Clearly, when using larger building blocks, the number of electrode lines may go up as well. In an embodiment, the number of electrode lines in a building block is between 8 and 50, or between 8 and 25, etc.

The electrodes that are formed by repeating building blocks are connected to the driving buses. Typically, electrode lines in a building block are connected to electrode lines in neighboring blocks by mering corresponding electrode lines; this is not necessary though, between repeated building blocks connection zones can be inserted that connect corresponding electrode lines.

This step can connect up multiple of the main lines together thus forming a single electrode. Figure 1b shows two connecting zones 119 and 129 in which the main lines belonging to the same electrode are connected to driving bus 110 and driving bus 120, respectively.

The electrodes that are shown in figure 1a are alternately dashed in the same dashing style of figure 1b. Indeed, it happens to be the case in this example, that a particular electrode of the building block of figure 1a will always end up in the first electrode or in the second electrode, e.g., as indicated in this case by the dashing style. This is, however, not necessarily the case. An electrode in a building block may end up as part of the first electrode or as part of the second electrode. This can change, e.g., as a result of the parity of the number of electrodes in the building block, the pattern in which the building blocks are repeated, etc.

For example, a particular pattern of repeated building blocks may be used for a light modulator with two electrodes, in which one might assign alternating main lines to the two electrodes. However, the same pattern of repeated building blocks may be used for a light modulator with three electrodes, in which one might assign every next set of three main lines to the three electrodes.

Furthermore, the building block shown in figure 1a is square, but this is also not needed. For example, a building block may be rectangular. In an embodiment, building block shape(s) could form a so-called tessellation. For example, a building block may be a triangle, a hexagon or even a combination of plane-filling shapes.

As said, figures 1a and 1b are schematic. This is especially the case for the depiction of the electrodes. An electrode as shown in figure 1a is straight, however, in an embodiment, an electrode on the building block is more convoluted, e.g., curved. By adapting the shape of the electrodes undesirable diffraction effects can be altered.

In an embodiment, a dimmable mirror comprises a light modulator according to an embodiment. For example, the dimmable mirror comprises a transparent substrate, an optical layer, and a reflective substrate. One or both of the substrates is according to an embodiment. The dimmable mirror may be electrophoretic. Typically, each substrate has two electrodes, but this is not necessary.

**Figure 1c** schematically shows an example of an embodiment of a substrate 101. Substrate 101 is similar to that of substrate 100, except for how the main lines are connected that formed from the electrodes on the building blocks to the driving buses. In figure 1a, a connection zone is inserted between the repeated building blocks and the driving buses 110 and 120. In the connection zone, the main lines belonging to the same electrode are connected to the same driving bus. In figure 1c, the driving bus is directly adjacent to the building blocks. To avoid that a driving bus connects to a main line of a different electrode, some of the building blocks are modified. Driving buses 110 and 120 may be configured as contact areas according to an embodiment.

For example, building block 141 may be a copy of building block 140, but the electrode 134 is shortened so that the main line 122 of which line 134 is a part does not connect to bus 110. In figure 1c the building blocks are substantially the same except that a disconnect is introduced in some electrodes of building blocks next to the driving bus to avoid connecting a main line with the driving bus. Although all building blocks shown in figure 1c are modified in this way, in an embodiment the majority of building blocks would not be modified, e.g., the building blocks that are not adjacent to driving buses 110, 120.

**Figure 1d** schematically shows an example of an embodiment of a substrate 102. In an embodiment, the electrodes in a building block each connect the same opposite sides of the building block. This has the consequence that the main lines that are formed by the electrodes on the building block connect opposite sides of the substrate. In such a situation having only two driving buses, e.g., each extending along an opposite side of the substrate, is sufficient to connect and drive the electrodes.

It is however not required for the electrodes in a building block to connect opposite sides of the building block. Although typically all electrodes in a building block will connect two sides of the building block, it is not required that these two sides are opposite. The reason for this, is that an electrode may be continued by a next building block. In such a situation, most main lines will still connect the same two opposite sides, but at the edge of the substrate this may not happen, as there are no further building blocks there to carry the electrode forward. To allow for more intricate electrode designs on the building blocks, the main line may be connected to a driving bus from two sides, e.g., two sides of the substrate that are adjacent to the same corner of the substrate.

Shown in figure 1d, is a driving bus 110' extending along two sides of the substrate and a driving bus 120' extending along the other two sides of the substrate.

An advantage of this configuration is that the driving buses can be made in the same plane. This is not necessary though. A driving bus could connect from three or all four sides if desired, e.g., to further increase design freedom for the building blocks. Various examples are given herein.

Note that electrodes, e.g., driving buses, and/or main lines are allowed to overlap. This is possible, e.g., by causing a part of dielectric material between the electrodes. For example, such overlapping electrodes could be partly or fully in different planes of the substrate.

For example, in an embodiment one might depose the first electrode. Then locally depose a dielectric, and finally depose a second electrode. The dielectric is arranged to cover at least the points where the first and second electrode cross. A via could be used to the lower first electrode, e.g., to connect to it. The deposing of the electrodes may include the deposing of the driving buses.

**Figure 1e** schematically shows an example of an embodiment of a substrate 203. In figure 1e, a building block has been copied multiple times.

Building block 211 has been mirrored in the y-direction to form building block 221. Building block 221 has been arranged directly at the bottom of building block 211. Building block 211 has been mirrored in the x-direction to form building block 212. Building block 212 has been arranged directly to the right of building block 211. Building block 211 has been mirrored in the x-direction as well as in the y-direction to form building block 222. For example, the mirroring may have as mirroring axis a side of the building block.

By mirroring the building block, it is ensured that driving buses of the same electrode end up next to each other on the substrate.

**Figure 1f** schematically shows an example of an embodiment of a substrate 204. In substrate 204 the building block is repeated across the substrate, in a different manner. Building block 251 has been mirrored in the y-direction to form building block 261. Building block 261 has been arranged directly at the bottom of building block 251. Building block 251 has been point reflected, e.g., rotated over 180 degree, to form building block 252. Building block 252 has been arranged directly to the right of building block 251. Building block 251 has been mirrored in the x-direction to form building block 262.

It is also possible to arrange building blocks without mirroring the pattern.

**Figure 1g** schematically shows an example of an embodiment of a light modulator, illustrating spacers. Shown is one of the two substrates together with an electrode system, in this case two interdigitated electrodes. For example, the other substrate of the light modulator of figure 1g may have a similar design. Shown in figure 1g are spacers. One such spacer is labeled 151. Spacers are small structures placed around the substrate to keep the two substrates at a constant distance. A spacer may be a dielectric, e.g., formed from the same material as one of the substrates.

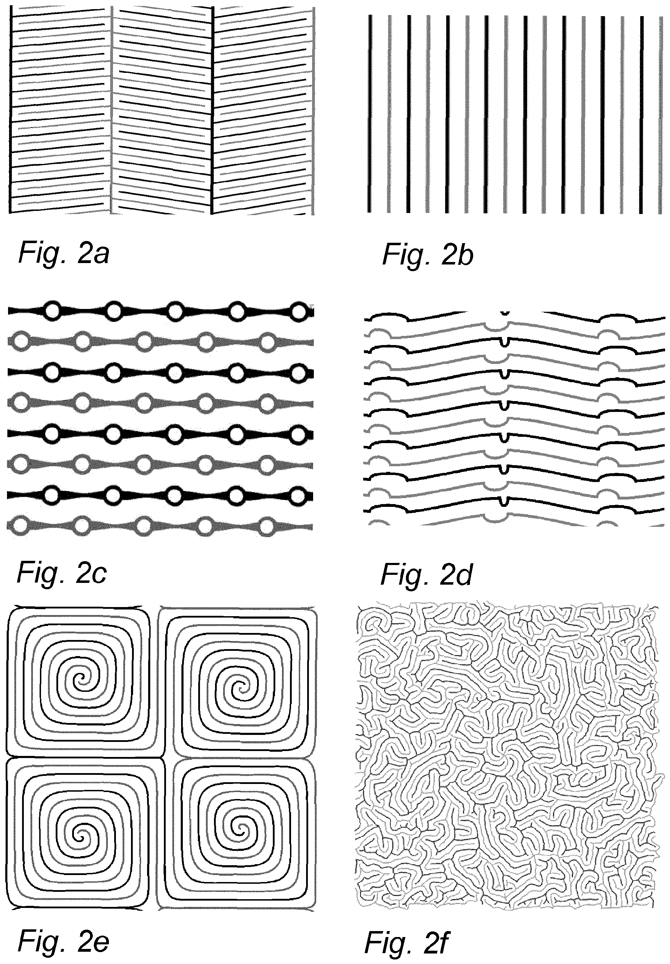

**Figures 2a-2f** schematically show examples of substrates with interdigitated electrodes. These may be embodied on a substrate with two electrodes, e.g., by alternatingly connected electrodes. Figures 2a-2d may also be embodied on a substrate with multiple electrodes, e.g., by connecting in sequences of 3 or 4 or more electrodes.

Figures 2e and 2f show designs with two electrodes on the surface of the substrate. Either design could be modified to have only a single electrode on the surface of the substrate, e.g., by removing one of the two electrodes. For example, such a modified design could be used in a light modulator that uses a substrate with a single electrode.

The designs shown can be realized in a single plane, without having crossing electrodes. In particular if these designs are connected to two driving buses, no crossing electrodes are needed. When more than two electrodes are used, or if more complicated electrode patterns are used, then crossing of the electrodes may be used, or may even become necessary. Such crossings are possible however for example, at the location where two electrode lines cross a dielectric material may be arranged between the electrodes. For example, such an insulator may be deposited at the crossing location. For example, a first electrode is in a first plane of the substrate and a second electrode is in a second plane of the substrate.

Two substrates according to an embodiment may be combined to form a light modulator. The light modulator is particularly suited to glazing. An exemplary embodiment of a light modulator is shown below.

**Figure 3a** schematically shows an embodiment of a light modulator 10, which may be applied in smart glazing.

Reference is made to patent application PCT/EP2020/052379, which is included herein by reference; this application comprises advantageous designs for light modulator, which may be further improved, e.g., by including electrodes, building blocks, and/or substrates as explained herein.

Light modulator 10 can be switched electronically between a transparent state and a non-transparent state and vice versa, or between a non-reflective state and a reflective state and vice versa. Light modulator 10 comprises a first substrate 11 and a second substrate 12 arranged opposite to each other. On an inner-side of first substrate 11 at least two electrodes are applied: shown are electrodes 13a, 13b. These at least two electrodes are together referred to as electrodes 13. On an inner-side of second substrate 12 at least two electrodes are applied: shown are electrodes 14a, 14b. These at least two electrodes are together referred to as electrodes 14. One or more of substrates 11 and 12 may be provided with one or more contact areas to enable electrical connection to at least the one or more electrodes applied on the substrate(s).

A fluid 15 is provided in between said substrate. The fluid comprises particles 30, e.g., nanoparticles and/or microparticles, wherein the particles are electrically charged or chargeable. For example, particles may carry a charge on their surface intrinsically. For example, the particle may be surrounded by a charged molecule. The fluid may be a liquid.

The electrodes are arranged for driving particles 30 to move towards or away from electrodes, depending on the electric field applied. The optical properties, in particular the transparency or reflectivity of the light modulator depend on the location of particles 30 in the fluid. For example, a connection may be provided for applying an electric field to the electrodes.

At least one, but preferably both electrodes 13 and 14 are according to an embodiment, though they are shown schematically in the figures.

In an example, substrate 11 and substrate 12 may be optically transparent outside of the electrodes, typically > 95% transparent at relevant wavelengths, such as >99% transparent. Taking electrodes into account, transparency can be much lower, e.g., 70%. The term "optical" may relate to wavelengths visible to a human eye (about 380 nm- about 750 nm), where applicable, and may relate to a broader range of wavelengths, including infrared (about 750 nm - 1 µm) and ultraviolet (about 10 nm-380 nm), and sub-selections thereof, where applicable. In an exemplary embodiment of the light modulator a substrate material is selected from glass, and polymer.

In another example, one substrate, such as a bottom substrate 12, may be reflective or partially reflective, while the top substrate 11 is transparent. The optical properties, in particular the reflectivity of the light modulator depends on the location of particles 30 in the fluid. When the panel is in the open state (vertical drive), the particles will mostly be located between opposite electrodes of the two substrates, such that incident light can pass through the transparent top substrate and the optical layer relatively unhindered and is reflected or partially reflected on the bottom substrate.

The distance between the first and second substrate is typically smaller than 30 µm, such as 15 µm. In an exemplary embodiment of the light modulator a distance between the first and second substrate is smaller than 500 µm, preferably smaller than 200 µm, preferably less than 100 µm, even more preferably less than 50 µm, such as less than 30 µm.

In an example the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example the device may be provided in at least one flexible polymer. As such the modulator may be attached to any surface, such as by using an adhesive.

Particles 30 may be adapted to absorb light and therewith preventing certain wavelengths from passing through. Particles 30 may reflect light; for example, the reflecting may be specular, diffusive, or in between. A particle may absorb some wavelengths and reflect others. Particles may also or instead emit light, e.g., using phosphorescence, fluorescence, or the like. Even the fluid may emit light, which emittance is modulated by changing the location of particles.

In an exemplary embodiment of the light modulator a size of the nanoparticles is from 20-1000 nm, preferably 20-300 nm, more preferably smaller than 200 nm. In an exemplary embodiment of the light modulator the nanoparticles/microparticles may comprise a coating on a pigment, and preferably comprising a core. In an exemplary embodiment of the light modulator the coating of the particles is made from a material selected from conducting and semiconducting materials.

In an exemplary embodiment of the light modulator the particles are adapted to absorb light with a wavelength of 10 nm-1 mm, such as 400-800 nm, 700 nm -1 µm, and 10-400 nm, and/or are adapted to absorb a part of the light with a wavelength-range falling within 10 nm-1 mm (filter), and combinations thereof.

In an exemplary embodiment of the light modulator the particles are electrically charged or chargeable. For example, a charge on the particles may be 0.1e to 10e per particle (5* 10⁻⁷-0.1 C/m²).

In an exemplary embodiment of the light modulator the fluid is present in an amount of 1-1000 g/m², preferably 2-75 g/m², more preferably 20-50 g/m², such as 30-40 g/m². It is a big advantage that with the present layout much less fluid, and likewise particles, can be used.

In an exemplary embodiment of the light modulator the particles are present in an amount of 0.01-70 g/m², preferably 0.02-10 g/m², such as 0.1 -3 g/m².

In an exemplary embodiment of the light modulator the particles have a color selected from cyan, magenta, and yellow, and from black and white, and combinations thereof.

The light modulator can be also configured to only, or primarily, modulate non-visible light such UV or near-IR, e.g., respectively in the range of about 10 nm-380 nm, and in the range of about 750 nm - 1 µm.

In an exemplary embodiment of the light modulator the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator the fluid has a relative permittivity □r of less than 100, preferably less than 10, such as less than 5. In an exemplary embodiment of the light modulator, fluid 15 has a dynamic viscosity of above 10 mPa.s.

Electrodes 13a, 13b and electrodes 14a, 14b are in fluidic contact with the fluid. The fluid may be in direct contact the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 n□m (at 273K; for comparison typically used ITO has 105 n□m), which is similar to an electrical conductivity >1*10⁷ S/m at 20°C).

In an embodiment of the light modulator, electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electric field to the electrodes, wherein the applied electric field to the electrodes provides movement of the nano- and microparticles from a first electrode to a second electrode and vice versa. A connection for applying an electric field to the electrodes may be provided. For example, in an exemplary embodiment of the light modulator an electrical current is between -100-+100µA, preferably -30-+30 µA, more preferably -25-+25 µA. For example, a power provider may be in electrical connection with the at least two electrodes. The power provider may be adapted to provide a waveform power. At least one of amplitude, frequency, and phase may be adaptable to provide different states in the light modulator. For example, these aspects of the power may be adapted by a controller 16. The controller 16 may be connected to the contact areas of the light modulator.

Light modulator 10 may comprise one or more segments, a segment being a single optically switchable entity, which may vary in size. The substrates enclose a volume, which may be a segment, at least partly.

The present device may comprise a driver circuit for changing the appearance of (individual) segments by applying an electric field. As such also the appearance of the light modulator, or one or more parts thereof, may be changed. For example, a segment may have an area of at least 1 mm². The present design allows for stacking to allow for more colors; e.g., for full color applications a stack of two or three modulators could provide most or all colors, respectively.

Having one or more segments allows the light modulator to be controlled locally; this is advantageous for some applications, but not necessary. For smart glazing, a light modulator may be used with or without segments. For example, applied in smart glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator substrates (11,12) are aligned, and/or electrodes (13,14) are aligned. For example, electrodes 13a, 13b and electrodes 14a, 14b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator, on the other hand, when selecting a light modulator for more criteria than the range of transparency or reflectivity, etc., it may be better not to align or not fully align the two substrates. Light modulators can be stacked. For example, two stacked light modulators can be made from three substrates, wherein the middles one has electrodes on both its surfaces. In an embodiment of the light modulator optionally at least one substrate 11,12 of a first light modulator is the same as a substrate 11,12 of at least one second light modulator. For stacked modulators, alignment may also increase maximum transparency or reflectivity, but it may be detrimental to other considerations, e.g., diffraction.

**Figure 3b** schematically shows an example of an embodiment of a light modulator 40. Light modulator 40 is similar to light modulator 10, except that it comprises multiple optical layers; in the example as shown two optical layers. There may be more than two optical layers. Each optical layer is arranged between two substrates. Light modulator 40 can be regarded as a stack of two-substrate light modulators as in figure 3a. As shown, light modulator 40 comprises three substrates: first substrate 41, second substrate 42 and third substrate 43. Between substrates 41 and 42 is an optical layer, and between substrates 42 and 43 is an optical layer. The optical layers may be similar to those in light modulator 10. A controller 46 is configured to control electrical current on the electrodes of the substrates. For example, in figure 3b, controller 46 may be electrically connected to at least 4 times 2 equals 8 electrodes.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

One or more of substrates 41, 42, and 43 may be provided with a contact area.

**Figure 3c** schematically shows an example of an embodiment of a car 20 having smart glazing for windows 21. This is a particularly advantageous embodiment, since while driving the level of incident lighting can change often and rapidly. Using smart glazing in a car has the advantage that light levels can be maintained at a constant level by adjusting the transparency of the car windows. Moreover, the reduced diffraction effect improves safety as it reduces driver distraction. Car 20 may comprise a controller configured for controlling the transparency or reflectivity of windows 21.

Smart glazing can also be used in other glazing applications, especially, where the amount of incident light is variable, e.g., buildings, offices, houses, green houses, skylights. Skylights are windows arranged in the ceiling to allow sunlight to enter the room.

The light modulator may have two optical states, e.g., a transparent state and a non-transparent state, or a non-reflective state and a reflective state. The light modulator, e.g., light modulator 10 or light modulator 40 may be configured to
- switch to the second optical state, e.g., the non-transparent state or to the reflective state by creating an alternating voltage on at least one of the first and second substrates, applying an alternating current between at least a first electrode and a second electrode on the first substrate and/or between a first electrode and a second electrode on the second substrate, and
- switch to the first optical state, e.g., the transparent state or to the non-reflective state by creating an alternating voltage between the first and second substrate, applying an alternating current between a first electrode on the first substrate and a first electrode on the second substrate, and/or between a second electrode on the first substrate and a second electrode on the second substrate.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first substrate and the second substrate is provided.

A driving signal applied to electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and the second substrates.

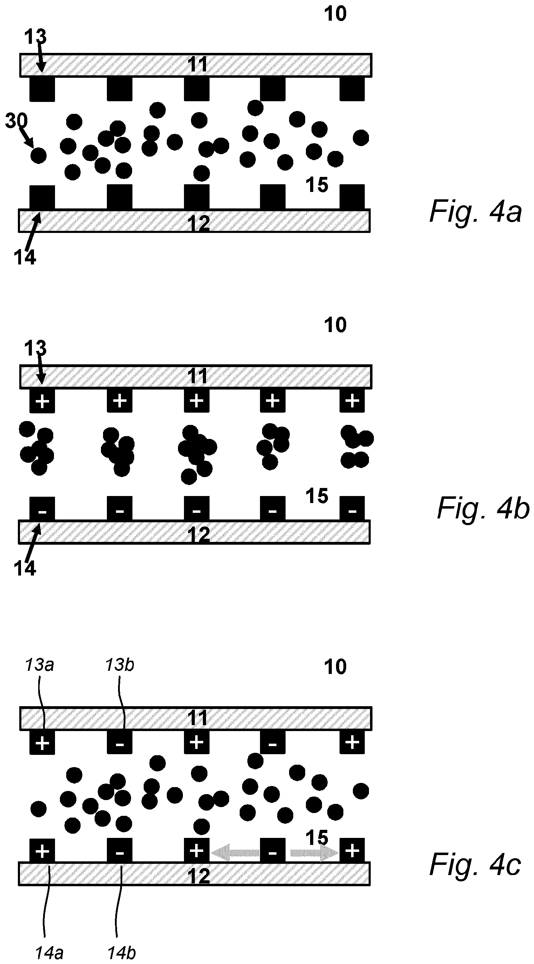

**Figures 4a-4b** schematically show a side view of an embodiment of a light modulator in use. In this figure only the electrodes are shown. The contact area(s) are not separately shown in these figures.

Applying an electric field to the electrodes on the substrates causes an electrical force on the particles. Using this effect, the particles can be moved around, and so different transparency or reflectivity states can be caused in the light modulator. A controller may control the electric field, e.g., its amplitude, frequency, and phase. In an embodiment, the controller is connected to at least four electrodes: two for each substrate. But more electrodes may be used and connected to the controller; for example, more than 2 electrodes may be used for a substrate to better fine-tune grayscaling and driving to non-transparent or reflective state. Multiple electrodes may also be used to support multiple segments on the substrate.

**Figure 4a** shows the light modulator without an electric field being applied. No electric force is yet applied on particles 30 suspended in fluid 15, in figure 4a.

In the configuration shown in figure 4a, a conducting electrode pattern, arranged on the top substrate is completely or substantially aligned with a conducting electrode pattern on the bottom substrate. The conducting electrode pattern may be deposited on a transparent or (partially) reflective glass substrate or may be embedded in a plastics substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to substrate that is higher or lower on the page. The same substrates could also be referred to, e.g., as the front substrate and back substrate, since in a glazing application, the substrates would be aligned vertically rather than horizontally.

**Figure 4b** shows the light modulator wherein, say at an instance P1, a potential +V1 is applied to each microwire electrode on the top substrate, while a negative voltage, say -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrate are transparent, the transparency of light modulator 10 will increase. Likewise, if, e.g., the top substrate is transparent and the bottom substrate is reflective, the reflectivity of light modulator 10 will increase If the solution contains positively charged particles they will flow to the vicinity of the electrodes of the bottom substrate, where those particles will substantially align with the bottom electrodes.

A similar transparency can be achieved, when in a second instance, P2, of the on-state, the voltages of the top electrodes and bottom electrodes are reversed in contrast to the instance of P1. In the instance P2, the voltage of each electrode on of the top substrate are now supplied with a negative potential -V1 while the voltages of the aligned electrodes of the bottom substrate are supplied with a positive potential. This state is similar to the state shown in figure 4b, but with top and bottom substrates reversed. In this configuration, the transparency of light modulator 10 is also high. If reflective particles are used, then reflectivity is low.

Interestingly, by switching between a positive potential at electrodes at the top substrate, e.g., as shown as electrodes 13 in figure 4b (and a negative potential on electrodes 14), and a positive potential at electrodes at the bottom substrate, e.g., as shown as electrodes 14 in figure 4b, the transparency or non-reflectivity can be maintained, while decreasing corrosion damage to the electrodes. This alternating electric field can be achieved by applying alternating electric potentials to the top and bottom electrodes.

Applying an AC waveform is optional, but it is a useful measure to increase the lifetime of the light modulator by reducing corrosion. Corrosion can form for example, when using copper electrodes, since copper ions dissolve in an ionic fluid at one substrate and flow to electrode on the opposite substrate, where they deposit. By applying a waveform, the direction of copper ion transport is frequently reversed, thus reducing corrosion damage. Between the two instances P1 and P2 the corrosion current between the two substrates is balanced or substantially, e.g., >95%, balanced, e.g., as corrosion rate of an electrode of the top plate occurs there is a balancing deposition of copper on the bottom electrode between each instance of time, P1 and vice versa in instance P2. Therefore, the particles are transitioning or migrating continuously between top and bottom electrode, and the light modulator or smart window is always in the on-state while the dynamic electrolysis current between the top and bottom electrode is constant thus there is no or a negligible net loss of electrode material on the top and bottom substrates.

**Figure 4c** shows how a state of decreased transparency or increased reflectivity can be obtained. An alternating voltage is applied on the same substrate. For example, in an embodiment a potential +V2 is applied to a first electrode and the next immediate neighboring electrode has an opposite potential -V2 etc., as shown in fig. 8c. This can be obtained by applying the potential +V2 to electrode 13a and the opposite potential -V2 to electrode 13b. On the opposite substrate the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or increase reflectivity, the opposite electrode may receive the same potential, while neighboring electrodes receive an opposite potential. An embodiment is shown in figure 4c, wherein four electrodes are indicated with the reference numbers 13a, 13b, 14a and 14b, and the rest of the electrodes continue to alternate.

By using this AC drive cycle between top and bottom substrates, diagonal and lateral electric fields are generated between the two substrates thereby causing haphazard diffusion of the particles thereby creating the closed state of the light modulator. As a result of this configuration, the particles migrate diagonally and laterally between the top and bottom substrate and diffusion of particles into the visible aperture of the light modulator contributes to the closed, opaque state of the light modulator.

As for the transparent state shown in figure 4b, a waveform may be applied to the electrodes, e.g., so that electrodes that are shown in figure 4b with a positive potential become negative and vice versa. As in figure 4b applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figures 1a, 1b, 2a-2f, etc.

The extent with which transparency or reflectivity is increased or decreased in figures 4b and 4c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grayscale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used for a light modulator. The electrode patterns may each provide a range of grayscales, e.g., levels of transparency or reflectivity, that the light modulator can attain. However, the particular range of grayscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1mm. Note that no pixilation of the light modulator is needed to achieve different optical patterns, e.g., logos, visible in the light modulator.

This effect may be used to embed visible images in the light modulator by locally changing the electrode pattern on the substrates of a light modulator. For example, one may locally have grayscales that have a permanent off-set in grayscale relative to each other, because of a different electrode pattern. For example, by locally changing the electrode pattern or its pitch, the maximum transparency or reflectivity can be altered.

The result is an area on the light modulator which has a different intensity of grayscale, e.g., a different grayscale, or of coloring. The area may have the same color-point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less response to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/Al is reflective, thus using a different electrode material, a different appearance may be obtained, irrespective of the voltage driving. Likewise, different materials with a different resistance will give rise to a different electric field. For example, ITO will have a smaller electric field, even though driven with the same voltage.

An embodiment of a method of modulating light, comprises applying an electric potential to multiple electrodes applied to two opposing substrates according to an embodiment to obtain an electric field between the multiple electrodes providing electrophoretic movement of the particles towards or from one of the multiple electrodes causing modulation of light shining through the substrates, wherein the two opposing substrates are as in an embodiment.

Various modes of operation are supported by an embodiment of a four-electrode light modulator system.

### Horizontal drive

Horizontal drive is a mode in which lateral electric fields are created along the substrate. The light modulator may apply alternating voltage on the interdigitated electrodes to cause the particles in the optical layer to move parallel to the substrate, thus decreasing transparency.

### Vertical drive

Vertical drive is a mode in which particles are aligned orthogonally to the substrates. Electrodes opposite to each other on opposite substrates receive a different voltage.

### Maintaining a grayscale

The light modulator drive system may apply 0 voltage on the electrodes most of the time, but if the grayscale is dropping, due to the particles dispersing, then briefly the electrodes and may be driven as in vertical drive.

In all three modes, the driving may use DC or AC signals. Preferably, AC signals are used.

**Figure 5a.1** schematically shows an example of a first substrate 510. **Figure 5a.2** schematically shows an example of a corresponding second substrate 520. The active area of substrates 510 and 520 is indicated with a grey shading. For example, the two substrates may be arranged on top of each other with an optical layer between them. Electrodes arranged in the active area of one or both substrates may be configured to modulator the optical layer and to cause optical transitions, e.g., from more to less transparent and vice versa.

Electrodes on substrate 510 of figure 5a. 1 are connected to contact areas 531 and 532 respectively. Electrodes on substrate 520 of figure 5a.2 are connected to contact areas 541 and 542 respectively. The contact areas are connected with the electrodes through an electric connection.

The contact areas are arranged on the substrate and are connected with the electrodes on the substrate. For example, the contact area is placed on the substrate. The contact area may be placed , e.g., on a ledge, although this is not necessary, e.g., created by displacing the substrate with respect to each other, or by shrinking one of the substrates with respect to the other.

One or more wires may be attached to a contact area to drive one or more electrodes connected to the contact area. For example, the wire may be connected to a controller of the light modulator.

Also shown in figure 5a.2 is a crack 551 which runs across the substrate and contact area. The crack breaks tracks that run across the substrate of figure 5a.2 A result either part 521 or 522 at opposite sides of crack 551may become disconnected from electricity. The disconnected part can no longer be optically modulated as a result and will permanently revert to one optical state, typically fully non-transparent, e.g., black.

**Figures 5b.1 and 5b.2** are similar to figures 5a.1 and 5a.2, except that additional material which does not fracture under the same circumstances in the contact areas enable a proper electricity connection. The result is a fully functioning device except at the specific area of the fracture. This may be achieved by using a conductive material attached to the contact area to enable electrical connection even if the substrate is fractured at the contact area. Driving electrodes on the first and/or second substrate extend to reach a corresponding contact area to establish an electrical connection with a controller of the light modulator or the like.

An advantageous light modulator comprises: a first substrate and a second substrate, the first and second substrates being arranged with inner sides opposite to each other, each edge of the first substrate running along a corresponding proximate edge of the second substrate, one or more driving electrodes being applied to the inner side of the first substrate; the first substrate being provided with a contact area to enable electrical connection to at least the one or more driving electrodes applied on the first substrate; an optical layer between the first and second substrates, the one or more driving electrodes being configured to cause modulation of optical properties of the optical layer, wherein a material is attached to the contact area that enables an electrical connection throughout the contact area even if the first substrate is fractured at the contact area. In an embodiment, this material is electrically conductive across the contact area, and has the ability to accommodate physical stress and retain the electrical connection, in case of fracture or deformation at the contact area. In an embodiment, the material comprises one or more of: a copper strip, optionally with conductive adhesive, an ACF material, a conductive glue, a conductive polymer, conductive resin.

The first substrate may be provided with the contact area external to the substrate, connected through an electrical connection. In the advantageous light modulator, a first edge of the first substrate may be laterally offset from a corresponding first edge of the second substrate to accommodate the contact area, the contact area running along the first edge of the first substrate in the laterally offset part. An advantageous light modulator may be built without this feature as well.

For example, the contact area may have a higher elasticity than the first substrate. For example, the Young modulus of the contact area may be at least 50% lower, preferably 75% lower, than the Young modulus of the first substrate.

In the example shown in figures 5b.1 and 5b.2, each contact area is connected to one driving electrode arranged across the first or second electrode. In an embodiment, one contact area is arranged to drive multiple electrodes each arranged across the substrate, e.g., using multiple connection pads.

Multiple configurations can be used for a light modulator. We will assume a four electrode light modulator, having two electrodes arranged across each of the two substrates. This is not necessary though. For example, a light modulator may have electrodes on only one side, e.g., two, or the light modulator may have electrodes on both sides, but not two on each substrate, e.g., 2 electrodes versus 1, or the light modulator may have more than two electrodes on one or both substrates; for example, one substrate may have three electrodes while the other has 1, 2 or 3 electrodes.

**Figure 6a.1** schematically shows an example of an embodiment of a light modulator 601 in a top view. **Figure 6a.2** schematically shows an example of an embodiment of light modulator 601 in a side view.

Light modulator 601 comprises a first substrate 610 and a second substrate 620. First substrate 610 and second substrate 620 are arranged with inner sides opposite to each other. In this case the substrates have four edges.

In general, we will refer to directions parallel to the substrates as lateral directions. We will refer to directions orthogonal to the plane of the substrates as normal directions.

First substrate 610 has a first edge 611, and further edges 612-614 (arranged clock-wise). Second substrate 620 has a first edge 621, and further edges 622-624 (arranged clock-wise). Each edge of the first substrate runs along a corresponding proximate edge of second substrate 620. First edge 611 runs along first edge 621. Further edges 612-614 run along further edges 622-624 respectively.

At least one of first and second substrate is transparent. Typically, both substrates are transparent; which may be used, e.g., in automotive and building applications. One transparent substrates and one non-transparent substrate may be combined, e.g., in a smart mirror.

One or more driving electrodes are applied to the inner side of at least the first substrate. One or more driving electrodes may also be applied to the inner side of the second substrate. In a preferred embodiment, each substrate has at least two driving electrodes on its inner side.

The light modulator shown has an optical layer 641 arranged between first substrate 610 and second substrate 620. One or more driving electrodes on the first and second substrate are configured to modulate optical properties of the optical layer. For example, in a preferred embodiment the optical layer comprises a fluid comprising particles. The light modulator is configured to apply an electric potential to the one or more electrodes to obtain an electric field at the one or more electrodes providing movement of the particles towards or from the one more electrodes causing the modulation of optical properties; e.g., transition from a high-transparent state to a low-transparent state and vice versa.

Although corresponding edges of the first and second substrate run along each other, e.g., they may be parallel or nearly parallel. As will be discussed, some or all of the edges may not be aligned; when projected in the normal direction, e.g., orthogonal to the plane of the substrates, two edges may not coincide. In fact, in an embodiment, none of the edges are aligned in this sense. In another embodiment, part of the edges are aligned but not all edges.

Two edges are nearly parallel, then one edge may run within at most 2 mm of the other; for example, for any given point on the shorter of the two edges, the nearest point on the other edge is at a distance of at most 2 mm. More preferably, they run within at most 1 mm, more preferably within at most 0.5 mm. A higher precision is possible , e.g., the two edges may run within 0.01 to 0.1 mm. For example, the two edges may be within 0.1 degree of parallel. Two nearly parallel edges that are not aligned may run within these limits after (virtually) aligning them with a translation of one of the edges in the plane of the substrate.

The two substrates have corresponding edges. An edge of second substrate 620 may be offset with respect to the corresponding edge of first substrate 610. For example, first edge 621 may be laterally offset, e.g., offset in the plane, while disregarding the spatial dimension orthogonal to the plane of substrate 610, over a distance indicated at lateral offset 615. For example, second edge 622 may be laterally offset over a distance indicated at lateral offset 616. In this case, third edge 623 is offset in the same direction as edge 621. In this case, fourth edge 624 is offset in the same direction as edge 622. Note that the lateral offsets 615 and 616 are each parallel to an edge of substrate 610.

In this configuration, the substrates are shifted with respect to each other, in particular the second substrate is shifted over both offsets with respect to the first substrate. In an embodiment, a connection area is provided on each substrate to connect to 2 driving electrodes on the respective substrate.

In an embodiment, the two substrates have the same dimensions. The two substrates are separated in the normal direction to allow space for the optical layer and laterally to created ledges around the light modulator, e.g., an area in which there is no other substrate directly in the normal direction. These offsets, e.g., these ledges, may accommodate a contact area

For example, the lateral offsets may be in the range from 60 micron to 1 cm, e.g., 100 micron, 1 mm, 3 mm, etc.

First substrate 610 is provided with a contact area to enable electrical connection to at least the one or more driving electrodes applied on the first substrate. Shown in substrate 610 are contact areas 631 and 632. Note that the second substrate 620 is shifted away from the contact areas. Likewise, on second substrate 620, the contact areas 633 and 634 may be provided. The contact areas 633 and 634 are drawn with a different pattern to indicate that the contact areas are arranged on the second substrate on a side not visible in the perspective of figure 6a. 1

In an embodiment, first substrate 610 comprises two contact areas 631 and 632 connected to two electrodes on first substrate 610 respectively, and second substrate 620 comprises two contact areas 633 and 634 connected to two electrodes on second substrate 620 respectively.

Not all of these contact areas need to be provided. For example, no electrodes may be present on second substrate 620, and thus no contact areas are needed. For example, one contact area may provide electricity to multiple electrodes, even on multiple substrates; accordingly only one contact area would be needed to provide electricity to multiple electrodes on both substrates, e.g., two electrodes on each substrate. The electrodes on a substrate may be arranged in a single layer, e.g., as in figure 1c, but a dual layer approach for the electrodes is also possible. For example, each electrode may be arranged in a layer and the electrodes in different layers are separated from each other; Such a design makes complicated electrode designs more straightforward, e.g., as in figure 2f.

In an embodiment, contact area 631 run along first edge 611 of first substrate 610 in the laterally offset part. Likewise, the other contact areas may run along the corresponding edges of the corresponding parts. The contact areas may run parallel.

The electrodes, e.g., the driving electrodes on a substrate extend to reach a contact area on a substrate, e.g., contact area 631; or one of the other contact areas if present.

In an embodiment, all four contact areas 631-634 are provided: two contact areas on neighboring edges of the first substrate and two contact areas on neighboring edges of the second substrate. Each contact area provided connection to one electrode on the substrate. In an embodiment, multiple contact areas may be arranged along the same edge, e.g., to provide electrical connectivity to multiple electrodes on the substrate.

Note that in the example of figure 6a.1, contact area 631 is provided along a first edge of the first substrate but no other contact area is provided on a second edge of the first substrate opposite the first edge. Another contact area 632 may be provided along a neighboring edge though.

The lateral offset (s) provides several advantages. The lateral offset creates a dedicated space for the contact area, making it easier to access and connect electrical components. This design may simplify the process of attaching driving electrodes and other electrical interfaces, allowing a more straightforward manufacturing process. The contact area can use more vertical space, as the other substrate is moved out of the way. A thicker contact area may have a lower chance of fracture, and make it easier to integrate the light modulator with external circuitry or components, as the connections are more accessible

This arrangement provides an efficient use of space within the device. By integrating the contact area into the existing edge of the substrate, it avoids the need for extra space or larger device footprints. Various types of lateral offset are possible, offering a greater flexibility in design

Locating the contact area at the edge, away from the central optical path, may aid in better heat dissipation as no corresponding connector is arranged vertically above it on the other substrate. It is noted that these advantages of lateral displacement also hold if no further measures are taken to reduce breakage probability in the contact area, e.g., by adding additional material.

In an embodiment, contact area 631 may have a higher elasticity than first substrate 610; For example, the Young modulus of the contact area may be at least 50% lower, preferably 75% lower, than the Young modulus of the first substrate. One or more, or all, of the contact areas, e.g., contact area 631 may comprise one or more of: a copper strip, optionally with conductive adhesive, an ACF material, a conductive glue, a conductive polymer, conductive resin. The contact area could comprise conductive polyurethane. The height of a contact area, e.g., contact area 631, may be between 0.01 and 2 mm, e.g., the height of the material. For example, even a resin layer with a height of 10 micron will absorb mechanical shock, preventing facture of the electrodes. Conductive resin will furthermore keep conductivity across the contact area even if a fracture were to occur.

This may be implemented by attaching a material to the contact area that enables an electrical connection throughout the contact area even if the first substrate is fractured at the contact area. In an embodiment, this material is electrically conductive across the contact area, and has the ability to accommodate physical stress and retain the electrical connection, in case of fracture or deformation at the contact area.

In an embodiment, one or more electrodes on a substrate extends until at least in the contact area, the material being attached on top of the one or more electrodes in the contact area.

The contact area may extend along at least 50%, preferably at least 75%, of the first edge. This is especially advantageous if the contact area connects only to one electrode, and different contact areas along different edges are used to connect to other edges.

A contact area may also contain multiple pads to connect to multiple individual electrodes. In such a situation, contact area may comprise an anisotropic material, as it avoids short-cutting the pads, yet does decrease the chance of fractures in the connecting area. The anisotropic may further be used to allow conduction of electricity vertically between the first and second substrate, e.g., to drive further electrodes on the second substrate from the same contact area; but this is not needed.

**Figure 6b.1** schematically shows an example of an embodiment of a light modulator 602 in a top view. **Figure 6b.2** schematically shows an example of an embodiment of the light modulator in a side view. Light modulator 602 is similar to light modulator 601, and the embodiments of figures 6a can be adapted for figure 6b. Figures 6b differ from 6a in that the second substrate is shifted in only one direction: lateral displacement 615. There is no offset 616.

In figures 6a and 6b, the second substrate is shifted with respect to the first substrate thus laterally offsetting the first edge 611 from corresponding edge 621. In figures 6a and 6b, the first substrate and the second substrate are of equal size; this is not necessary. In figure 6b, the shift has no component parallel to first edge 611 of the first substrate, but does have a component parallel to neighboring edge 612 of the first substrate.

A contact area 631 is provided along first edge 611 of first substrate 610, no contact area is provided along a second edge of the first substrate opposite the first edge, e.g., at edge 613. On second substrate 620 there may be a contact area 633, along edge 623.

**Figure 6c.1** schematically shows an example of an embodiment of a light modulator 603 in a top view. **Figure 6c.2** schematically shows an example of an embodiment of the light modulator in a side view. Also light modulator 603 is similar to light modulators 601 and 602. However, in figure 6c the substrates 610 and 620 are not of the same size. The lateral offset is obtained by the size difference, not only by shifting the substrates. In this example, the edges of substrates 610 and 620 run along each other, e.g., may be parallel.

For example, edge 611 of first substrate 610 runs along edge 621 of second substrate 620, having a lateral offset of size 615. For example, edge 612 of first substrate 610 runs along edge 622 of second substrate 620, having a lateral offset of size 616. For example, edge 613 of first substrate 610 runs along edge 623 of second substrate 620, having a lateral offset of size 615. For example, edge 614 of first substrate 610 runs along edge 624 of second substrate 620, having a lateral offset of size 616.

In this configuration, the bottom substrate is bigger than the top substrate on 4 edges. If needed, the electrical connection of the top substrate may be derived from the bottom substrate, e.g., using an electrical connection bridge, e.g., using a gold ball for example, e.g., using conventional display processes

In an embodiment, a contact area is placed on each side of the substrate. Shown are contact areas 631, 632, 633 and 634. In this way four electrodes may be driven using a conveniently placed contact area. For example, two contact areas, say 631 and 632, may drive two electrodes on the first substrate, while two other contact areas, say 633 and 634 may drive two electrodes on the second substrate. To achieve electrical conduction from contact areas on the first substrate to electrodes on the second substrate, a conduction area between the two substrates can be arranged. For example, contact areas 631 and 633 may drive two electrodes on the first substrate, while the two other contact areas 632 and 6343 drive two electrodes on the second substrate. If needed, the contact area may be provided with additional material to decrease fracturing, e.g., using a copper strip covering the full side.

**Figure 6d.1** schematically shows an example of an embodiment of a light modulator 604 in a top view. **Figure 6b.2** schematically shows an example of an embodiment of the light modulator in a side view. Light modulator 602 is similar to light modulator 602, in the sense that only offsets in one direction are used, in this case offset 615. However, as in figures 6c, second substrate 620 has a smaller dimension than first substrate 610. In case of figure 6c, second substrate 620 is smaller in both lateral direction. In case of figures 6d the dimension of second substrate 620 is the same as that of first substrate 610 in one direction, but smaller in the other.

A ledge is created on opposite sides of the first substrate 610. A contact area 631 is provided along first edge 611 of first substrate 610. A contact area 633 is provided along edge 613 of first substrate 610. No contact area is provided on the second substrate.

For example, the configuration of figures 6d may be used to support a light modulator having two electrodes on the first substrate, but none on the second substrate, e.g., using one contact area for each electrode. For example, the configuration of figures 6d may be used to support a light modulator having multiple electrodes on the first substrate, and one or multiple electrodes on the second substrate, e.g., by arranging one or both of the contact areas 631, 633 with multiple connection pads, and/or with bridging connections.

Various substrates are shown in figures 7a-7c. These may be used in the light modulators of figures 6a-6c, e.g., instead of the shown substrates. The substrate 701-703 of may be used as the first substrate in light modulator, or as the second substrate in a light modulator if the second substrate has a contact area.

**Figure 7a** schematically shows an example of an embodiment of a substrate 701 for a light modulator.

Shown is a substrate 610, on which two contact areas 631 and 635 are arranged along the same edge 611. Two electrodes on substrate 701 connect to the respective contact areas. The two different electrodes are indicated with a different dashing style. In this example, the two contact areas 631 and 635 are each electrically connected and drive only a single one of the electrodes. Note that more than two electrodes could be accommodated by increasing the number of electrodes to a higher number, e.g., 3, etc.

The electrodes may be arranged from multiple main lines, stretching across the substrate. The multiple main lines are interconnected by multiple interconnections. For the first electrode, one of the main lines, main line 711, is indicated. Some of the interconnections of the first electrode are redundant, e.g., connection 712. The connection is redundant because the connection is also provided by connection area 631. Other connections are not redundant, e.g., connections 713.

For the second electrode, one of the main lines, main line 721, is indicated. Some of the interconnections of the first electrode are redundant, e.g., connection 722. The connection is redundant because the connection is also provided by connection area 631. Other connections are not redundant, e.g., connections 723.

By increasing the number of redundant connections, e.g., by providing multiple connections between each adjacent main line, the resilience against fractures is increased. A material may be applied to the contact areas to decrease the chance of fracture.

In an embodiment, multiple electrodes connections for the same electrode are provided on one or more sides of the substrate.

**Figure 7b.1** schematically shows an example of an embodiment of a substrate for a light modulator. Instead of two contact areas 631 and 635 each dedicated to one electrode, one large contact area is provided that extends along edge 611 of the substrate. The contact area comprises connecting pads A for the first electrode and connecting pads B for the second electrode. A material may be provided across the contact area to reduce breakage. For example, electrodes on the substrate, e.g., the first and second substrate, e.g., the main lines, 711 and 721, may extend into contact area 631 to connect with contact pads, e.g., a contact pad corresponding to a main line. Contact pads corresponding to the same electrode may be interconnected. On top of the contact pads a material may be applied, e.g., to reduce breakage, interconnect the multiple connecting pads, and/or enable connection from outside the light modulator to the electrodes.

On each of the connectors, an additional connecting film can be placed. Especially advantageous for small pitch and contact pads dimensions, an ACF bonding strategy can be used. The conductive film is a made of conductive particles like gold dispersed into an insulating polymer. This enables conduction of electricity in the normal direction, between the substrate, but not laterally parallel to the substrate. A specific foil bonding with adapted tracks can be attached to this ACF film. This way multiple contact pads of the same electrode can be electrically interconnected and driven while all or part of electrodes have contact pads on that particular area of the substrate.

In an embodiment, a substrate is provided with two electrodes, each comprising multiple connectors, arranged along an edge of the substrate. The multiple connectors belonging to the same electrode are interconnected. Anisotropic Conductive Film (ACF) bonding is employed across the connecting area. On top of the ACF film, connected tracks are provided that align with the connectors of a single electrode, thereby facilitating the electrical interconnection of multiple contact pads of the same electrode.

This arrangement is particularly advantageous when dealing with small pitch and contact pad dimensions.

Connectors of the same electrode connect through the ACF film to the connecting tracks, e.g., of a connecting foil. The ACF ensures no shortcuts are created. This arrangement enables the electrical driving of the interconnected contact pads. Depending on the design, this technique can be used to interconnect all or only part of the electrodes' contact pads in a particular area of the substrate.

Through this embodiment, efficient and reliable electrical interconnection of multiple connectors associated with the same electrode on a substrate can be achieved. This concept is applicable irrespective of the shape of the window.

Note that the driving electrodes on substrate 702 each extend to reach the contact area of the first substrate at multiple positions along the first edge. Through the above configurations all of these contact pads may be interconnected, thus increasing redundancy in case of fracture.

Figure 7b. 1 also shows interconnections 714 for the first electrode and interconnections 724 for the second electrode. If the electrodes are already connected up through the connecting pad, e.g., using the advantageous configuration mentioned above, then these interconnections are not needed. Nevertheless, they will increase redundancy and thus reliability.

**Figure 7b.2** schematically shows an example of an embodiment of a substrate for a light modulator. Figure 7b.2 shows one way in which the configuration of 7b.1 may be realized. In figure 7b.2, contacts A and B are offset from each other; this was done for clarity and is not actually necessary, although it is possible.

Contacts B are connected with each other through a connect 733 which is made of a conductive material. Contacts A are also connected with each other through another connect 732 which is also made of a conductive material. Preferably, connects 732 and 733 are made from a material that resists cracking. Connects 723 and 733 are shown straight, but this is not necessary.

Lines 711 are connected to contacts A. Lines 721 are connected to contacts B. Lines 721 are isolated from lines 711, contacts A, and connect 732 through dielectric patches 731. In the configuration shown, connect 732 crosses over lines 721, but at the crossing points a dielectric patch is inserted between connect 732 and the line, isolating them from each other.

**Figure 7c** schematically shows an example of an embodiment of a substrate 703 for a light modulator. In the substrate of figure 7c, two contact areas, areas 631 and 633, are arranged on the substrate; in this case on opposite edges of the substrate. This arrangement has the advantage that the contact area can extend along a large portion of the substrate, e.g., over 75% of the edge size, e.g., extending to all main lines, and thus provide redundancy for the electrodes. Nevertheless, optional interconnections 714 and 724 for the first and second electrode respectively are shown.

Note that an interconnect, as in figures 7a-7c is isolated from the other electrode; e.g., interconnection 714 is isolated from main lines 721. This may be achieved by using two layers in the substrate, e.g., one for main lines and one for interconnections; or one for the first electrode including its interconnections and one for the other electrode including its interconnections. This may also be achieved by locally arranging an isolator in between where interconnections and mainlines cross.

In an embodiment, all electrode connectors on a substrate edge are present multiple times, possibly even on multiple sides of the substrate.

**Figure 8a** schematically shows an example of an embodiment of a substrate 801 for a light modulator. **Figure 8b** schematically shows an example of an embodiment of a substrate 802 for a light modulator.

The contact area at an edge of the first or second substrate comprises multiple individual connecting pads that each connect to a single electrode on the first and/or second substrate, each electrode connected through the contact area being connected to multiple connecting pads in the contact area.

For example, the pads labeled A and C may be connected to electrodes on the substrate shown, while pads labeled B and D may be connected to electrodes on the opposite substrate (not shown in figures 8a and 8b).

The connectors may be connected by placing an additional connecting film on each of the connectors. An ACF bonding strategy can be used. This is especially advantageous for small pitch and contact pads dimensions. A conductive ACF film may be made of conductive particles like gold dispersed into an insulating polymer. This enables conduction of electricity vertically but not horizontally across the material. A specific foil bonding with adapted tracks can be attached to this. This way multiple contact pads of the same electrode can be electrically interconnected and driven while all or part of electrodes have contact pads on that particular area of the substrate.

To interconnect the pads small areas may be used to transfer electricity from the first substrates and the second substrate, e.g., as shown in figure 9. For example, locally pads A and B may be linked to electrodes on substrate 1, while pads C and D are connected to transfer zone, typically a conductive area, that brings the electricity to a transfer zone on the second substrate which is then connected to the electrodes on the second substrate. For example, conductive area may be connected to conductive polymer, e.g., a resin, to transfer the power to the second substrate's transfer zone.

To connect with external power supply, the series of A,B,C,D connectors may be connected via ACF bonding to a foil with multiple channels. If the number of channels too large, it is also possible to group the As, Bs, Cs and Ds together, e.g., as shown in figure 7b.2.

This concept is applicable irrespective of the shape of the window. Figure 8a shows a rectangular substrate, having four edges. Figures 8b shows a triangular substrate, having three edges. Other shapes are possible, e.g., polygons. Typically, edges are straight, though this is not necessary.

**Figure 9a** schematically shows an example of an embodiment of a light modulator 900. Shown are a first substrate 910 and a second substrate 920. A contact area 901 is shown, configured to connect to an electrode 902. Electrode 902 may not extend across substrate 902, but may extend across the lateral displacement of substrate 920. On top of electrode 902, an anisotropic connecting element 903 is placed. On the other side of element 903, the element connects to an electrode on substrate 920 (not separately shown).

The driving electrodes applied to the inner side of the second substrate 920 may thus be driving from contact area 901. The one or more driving electrodes on the second substrate are connected with part of the contact area to bridge electrical connection from the contact area on the first substrate to the second substrate.

The use of an anisotropic connecting element 903 is a particularly advantageous way to organize the bridge of electricity. For example, the application of anisotropic connecting element 903 is straightforward, yet reliable.

Substrate 920 and 910 are shown as having the same size, but this is not necessary. Substrate 920 may be smaller than substrate 910. Substrate 920 and 910 may be laterally displaced over one or two dimensions.

A more complicated example of bridging power from the first substrate to the second substrate is shown in figures 9b. **Figure 9b.1** schematically shows an example of an embodiment of a first substrate for a light modulator. **Figure 9b.2** schematically shows an example of an embodiment of a second substrate for the light modulator.

Shown on first substrate 910 are four contact pads, which may be part of the same contact area. Some of the contact pads connect to electrodes on substrate 910, e.g., pads A and C connect to electrodes 911 and 912. Some of the contact pads connect to connecting electrodes on substrate 910, e.g., pads B and D connect to first substrate connecting electrodes 921 and 922. These electrodes typically do not run across substrate 910, but only across the lateral displacement to reach anisotropic connecting element 903. Anisotropic connecting element 903 extends across all four the electrodes 911, 921, 912 and 922, but nevertheless does not cause a shortcut, because of the anisotropic effect.

On second substrate 920, second substrate connecting electrodes 931 and 932 are applied. The second substrate connecting electrodes 931 and 932 align with the first substrate connecting electrodes 921 and 922, taking into account any displacement of substrate 910 and 920 if needed. Through the anisotropic effect there is an electric connection between connecting electrodes 921 and 931, and between connecting electrodes 922 and 932. The second substrate connecting electrodes 931 and 932 are connected to the electrodes running on the second substrate, electrodes 941 and 942 through transitioning elements 951 and 952, e.g., electrode tracks. The second substrate electrodes are aligned with the first substrate electrode, e.g., electrodes 941 and 942 vertically align with electrodes 911 and 912.

Accordingly, four electrodes can be driven from the four pads shown in figure 9b.1: two electrodes on first substrate 910 and two electrodes on second substrate 920.

**Figures 10a-10e** schematically show examples of an embodiment of a light modulator, in different stages of manufacture.

Shown in figure 10a are two substrates arranged as in figures 6c. In this configuration, the bottom substrate is bigger than the top substrate, thus creating ledges along all 4 edges.

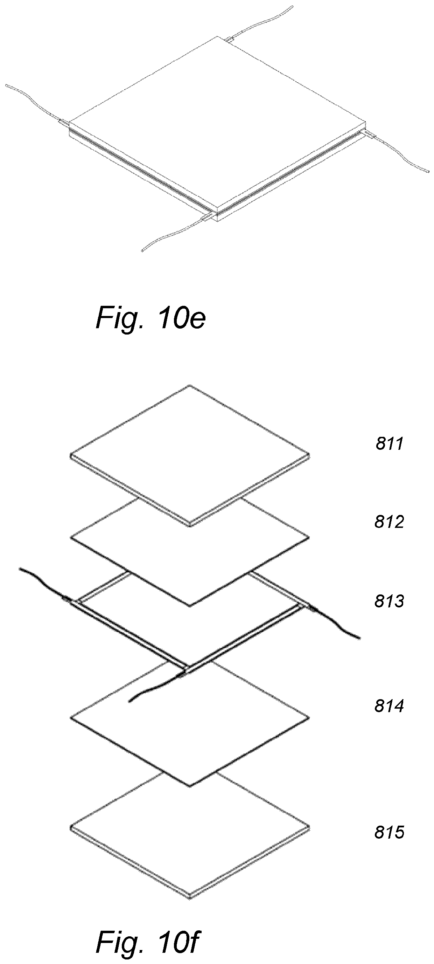

Shown in figure 10b, each side of the bottom substrate receives exactly contact area, in the form of a copper strip which covers the full edge, or nearly so, e.g., for at least 95%. The copper strip may be copper tape. Electrodes on the bottom and top substrate are not separately shown in figures 10. Two of the contact areas shown in figure 10b connect to two different electrodes arranged across the bottom substrate, and two of the contact areas shown in figure 10b connect to two different electrodes arranged across the top substrate. The electrical connection of the top substrate is derived from the bottom substrate, e.g., using an ACF connection, or any other conventional technique of bridging two substrates.

Thus, the bottom (first) substrate comprises four contact areas: two contact areas are connected to two electrodes on the first substrate and two contact areas are bridged to connect to two electrodes on the second substrate.

The light modulator of figure 10b is laminated on both sides (although only one side is possible). In this way the configuration shown in figure 10c is obtained. Note that the contact area extends from the edge to provide a contact point. A wire may be attached as shown in figure 10d. Figure 10e shows a perspective view of the finished product.

Figure 10f shows an exploded view of the laminated light modulator. Shown is a light modulator 813 which is laminated on each side with a substrate, shown are substrates 811 and 815, e.g., a glass substrate, e.g., tempered glass. The glass substrate may, e.g., be 4 mm. The connection between the substrates and the light modulator may be PVB, e.g., Polyvinyl Butyral.

In an embodiment, the laminated light modulator comprises in order: a glass substrate, a PVB layer, a light modulator, a PVB layer, and a glass substrate. Instead of a glass substrate another transparent substrate may be used. The glass is preferably tempered.

It is possible to laminate the light modulator only on one side. For example, such a laminated light modulator may comprise in order: a glass substrate, a PVB layer, and a light modulator.

**Figure 11** schematically shows an example of an embodiment of a manufacturing method 400 for a light modulator. Manufacturing method 400 may comprise
- providing (410) a first substrate and a second substrate, one or more driving electrodes being applied to the inner side of at least the first substrate, the first substrate having a contact area to enable electrical connection to at least the one or more driving electrodes applied on the first substrate, the contact area running along a first edge of the first substrate.

For example, the first and second substrate may be according to an embodiment, e.g., as shown in the figures.
- arranging (420) the first and second substrates with inner sides opposite to each other, each edge of the first substrate running along a corresponding proximate edge of the second substrate, wherein a first edge of the first substrate is laterally offset from a corresponding first edge of the second substrate to accommodate the contact area in the laterally offset part.

Various constructions are possible, e.g., with equal sized substrates, different sized substrates, and the like. The substrate may be polygonal, e.g., rectangular. Edges of the substrate may be straight and/or curved.
- arranging (430) an optical layer between the first and second substrates, the one or more driving electrodes being configured to cause modulation of optical properties of the optical layer. For example, a fluid, e.g., liquid, may be applied between the substrates and a seal may surround the fluid.

For example, in an embodiment, a seal is applied to a substrate to surround the substrate, e.g., the active area of the substrate, while the contact area is outside of the sealed area. Electrodes run underneath the seal towards their contact area. An optical layer is then applied, e.g., a fluid and particles are applied. Then the second substrate is glued on top of the seal, forming the light modulator.

Optionally, the manufacturing may comprise
- laminating (440) the light modulator on or both sides with one or more transparent substrate, a connection between the substrate and the light modulator may comprise a transparent interlayer adhesive.

The transparent interlayer adhesive may be a thermoplastic, e.g., PVB.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A light modulator comprising:
- a first substrate and a second substrate, the first and second substrates being arranged with inner sides opposite to each other, each edge of the first substrate running along a corresponding proximate edge of the second substrate, one or more driving electrodes being applied to the inner side of the first substrate,
- the first substrate being provided with a contact area to enable electrical connection to at least the one or more driving electrodes applied on the first substrate, wherein a first edge of the first substrate is laterally offset from a corresponding first edge of the second substrate to accommodate the contact area, the contact area running along the first edge of the first substrate in the laterally offset part, and
- an optical layer between the first and second substrates, the one or more driving electrodes being configured to cause modulation of optical properties of the optical layer.

2. The light modulator of claim 1, wherein,
- a driving electrode of the one or more driving electrodes on the first substrates extends to reach the contact area of the first substrate at multiple positions along the first edge,
- an electrical interconnection is established between the multiple edge positions of the driving electrode on the first substrate, thereby providing redundant electrical connection for the driving electrode across the first substrate.

3. A light modulator as in any one of the preceding claims, wherein one or more driving electrodes are applied to the inner side of the second substrate, the one or more driving electrodes on the second substrate being connected with part of the contact area to bridge electrical connection from the contact area on the first substrate to the second substrate.

4. A light modulator as in any one of the preceding claims, wherein the optical layer comprises a fluid comprising particles, the light modulator being configured for applying an electric potential to the one or more electrodes to obtain an electric field at the one or more electrodes providing movement of the particles towards or from the one more electrodes causing the modulation of optical properties.

5. A light modulator as in any of the preceding claims, wherein the first substrate is larger than the second substrate and laterally extends at all of the second substrate edges

6. A light modulator as in Claim 5, wherein a contact area is provided along a first edge of the first substrate and along a second edge of the first substrate, wherein
- the second edge is adjacent to the first edge,
- the second edge is not adjacent to the first edge, e.g., opposite the first edge.

7. A light modulator as in any of the preceding claims, wherein the second substrate is shifted with respect to the first substrate thus laterally offsetting the first edge.

8. A light modulator as in Claim 7, wherein the shift has a component parallel to a first edge of the first substrate, and a component parallel to a second edge of the first substrate adjacent to the first edge.

9. A light modulator as in any of the preceding claims, comprising a contact area along each edge of the first substrate.

10. A light modulator as in any of the preceding claims, wherein
- the first substrate comprises four contact areas: two contact areas are connected to two electrodes on the first substrate and two contact areas are bridged to connect to two electrodes on the second substrate, or
- the first substrate comprises two contact areas connected to two electrodes on the first substrate, and the second substrate comprises two contact areas connected to two electrodes on the second substrate.

11. A light modulator as in any of the preceding claims, wherein the contact area extends along at least 50%, preferably at least 75%, of the first edge.

12. A light modulator as in any of the preceding claims, wherein each edge of the first substrate is parallel to the corresponding proximate edge of the second substrate.

13. A light modulator as in any of the preceding claims, wherein the contact area at an edge of the first or second substrate comprises multiple individual connecting pads that each connect to a single electrode on the first and/or second substrate, each electrode connected through the contact area being connected to multiple connecting pads in the contact area.

14. A light modulator as in any of the preceding claims, wherein the contact area has a higher elasticity than the first substrate.

15. A light modulator as in any of the preceding claims, wherein the Young modulus of the contact area is at least 50% lower, preferably 75% lower, than the Young modulus of the first substrate.

16. A light modulator as in any of the preceding claims, wherein the contact area comprises an anisotropic connection from the first substrate to the second substrate, allowing conduction of electricity between the first and second substrate but not across the first substrate.

17. A light modulator as in any of the preceding claims, wherein a bonding foil is attached to the contact area, multiple contact pads of the same electrode can be electrically interconnected and driven while all or part of electrodes have contact pads on that particular area of the substrate.

18. A light modulator as in any of the preceding claims, wherein the contact area comprises one or more of the list: Copper strip with conductive adhesive, ACF material, Conductive glue, Conductive polymer, Conductive resin, silver paste.

19. A light modulator as in any of the preceding claims, wherein the lateral offset is in the range from 60 micron to 1 cm, e.g., 100 micron, 1 mm, 3 mm.

20. A light modulator as in any of the preceding claims, wherein one or more wires are attached to a contact area to drive one or more electrodes connected to the contact area.

21. A substrate for a light modulator, one or more driving electrodes being applied to the inner side of the first substrate, the substrate being provided with a contact area to enable electrical connection to at least the one or more driving electrodes applied on the substrate, the contact area running along the edge of the substrate, the one or more driving electrodes being configured to cause modulation of optical properties of an optical layer.

22. A manufacturing method (400) for a light modulator, comprising
- providing (410) a first substrate and a second substrate, one or more driving electrodes being applied to the inner side of at least the first substrate, the first substrate having a contact area to enable electrical connection to at least the one or more driving electrodes applied on the first substrate, the contact area running along a first edge of the first substrate
- arranging (420) the first and second substrates with inner sides opposite to each other, each edge of the first substrate running along a corresponding proximate edge of the second substrate, wherein a first edge of the first substrate is laterally offset from a corresponding first edge of the second substrate to accommodate the contact area in the laterally offset part,
- arranging (430) an optical layer between the first and second substrates, the one or more driving electrodes being configured to cause modulation of optical properties of the optical layer.

23. A method as in Claim 22, comprising
- laminating (440) the light modulator on one or both sides with one or more transparent substrate, a connection between the substrate and the light modulator may comprise a transparent interlayer adhesive.
